# EUROPÄISCHE PATENTSCHRIFT

(11) **EP 2 203 331 B1**
(45) Veröffentlichungstag und Bekanntmachung des Hinweises auf die Patenterteilung: **28.11.2012**
(21) Anmeldenummer: 08843505.2
(22) Anmeldetag: 30.10.2008
(51) Int. Cl.: B60R 21/231, B60R 21/237, B60R 21/235, B60R 21/217, B60R 21/232

(54) **AIRBAGEINRICHTUNG ZUM SCHUTZ EINES FAHRZEUGINSASSEN**
AIRBAG DEVICE FOR PROTECTING A VEHICLE PASSENGER
SYSTÈME D'AIRBAG POUR PROTÉGER UN OCCUPANT D'UN VÉHICULE

(30) Priorität: 30.10.2007 DE 202007015431 U
(43) Veröffentlichungstag der Anmeldung: 07.07.2010
(73) Patentinhaber: Takata AG, 63743 Aschaffenburg (DE)
(72) Erfinder: WEYRICH, Christian, 89275 Eichingen (DE); SCHÄFER, Stefan, 89155 Erbach (DE)
(74) Vertreter: Müller, Wolfram Hubertus
(86) Internationale Anmeldenummer: PCT/EP2008/064726
(87) Internationale Veröffentlichungsnummer: WO 2009/056595

(56) Entgegenhaltungen:
- EP-A- 1 464 549
- DE-U1-202006 000 846
- US-A1- 2002 167 153
- US-B1- 7 261 316

## Beschreibung

Die Erfindung betrifft eine Airbageinrichtung zum Schutz eines Fahrzeuginsassen nach dem Oberbegriff des Anspruchs 1.

Eine derartige Airbageinrichtung in Form einer Seitenairbageinrichtung dient insbesondere zum Schutz des Oberkörpers und/oder Kopfes eines Fahrzeuginsassen, indem in einem Crash-Fall, zum Beispiel bei einem Seitenaufprall, eine Kollision des Oberkörpers/Kopfes mit der seitlichen Fahrzeugstruktur, z.B. Fensterscheibe eines Kraftfahrzeugs bzw. einer seitlichen Säule oder einer Türbrüstung der Fahrzeugstruktur und/oder mit einem in das Fahrzeug eindringenden Objekt verhindert wird. Die Airbageinrichtung umfasst hierzu mindestens einen mit Gas aufblasbaren Bereich, der im aufgeblasenen Zustand ein Gaskissen für einen zu schützenden Fahrzeuginsassen bildet, wobei der aufblasbare Bereich eine erste Materiallage (Gassacklage) aufweist, die sich - bezogen auf den in ein Kraftfahrzeug eingebauten, aufgeblasenen Zustand der Airbageinrichtung - vor der seitlichen Fahrzeugstruktur, z.B. vor einer seitlichen Fensterscheibe eines Kraftfahrzeugs erstreckt, sowie eine zweite Materiallage (Gassacklage), die im aufgeblasenen Zustand der Airbageinrichtung . der ersten Gassacklage gegenüber liegt, und so z.B. dem Fahrzeuginnenraum und damit dem Oberkörper/Kopf eines zu schützenden Fahrzeuginsassen zugewandt ist.

Derartige Seitenschutzvorrichtungen für Fahrzeuginsassen auf Basis einer Airbageinrichtung sind allgemein bekannt. In einer Auslegung dient eine solche Seitenairbageinrichtung als Kopfschutzvorrichtung nicht nur zum Schutz des Kopfes eines einzelnen, zum Beispiel auf einem Vordersitz eines Kraftfahrzeugs befindlichen Fahrzeuginsassen, sondern vielmehr dem (gleichzeitigen) Schutz mehrerer Fahrzeuginsassen, insbesondere zweier in einem Kraftfahrzeug hintereinander sitzender Insassen, indem sich die Kopfschutzvorrichtung in Form einer Airbageinrichtung nicht nur vor einer vorderen, sondern auch vor mindestens einer hinteren Seitenscheibe eines Kraftfahrzeugs erstreckt, also etwa in Fahrzeuglängsrichtung von der so genannten A-Säule über die B-Säule bis zur C-Säule oder D-Säule eines Kraftfahrzeugs verläuft, vergleiche WO 2001/089884 A1.

Dabei geht es vorliegend aber nicht nur um Kopfschutzvorrichtungen, sondern allgemeiner um Seitenschutzvorrichtungen in Form einer Airbageinrichtung, die an der seitlichen Fahrzeugkarosserie, z. B. am Dachrahmen, an einer Fahrzeugtür oder an einem Fahrzeugsitz befestigt werden kann. Derartige Airbageinrichtungen werden allgemein auch als Seitenairbags bezeichnet.

Speziell im Fall einer Airbageinrichtung, die als Seitenairbag zum Schutz des Kopfes eines Fahrzeuginsassen ausgelegt ist, also als ein so genannter Kopf-Seitenairbag, erstreckt sich in der Regel mindestens ein aufblasbarer Bereich der Airbageinrichtung vor einer seitlichen Fensterscheibe.

US 7 261 316 B1offenbart eine Airbageinrichtung gemäβ dem Oberbegriff der Anspruchs 1.

Der Erfindung liegt das Problem zugrunde, eine Airbageinrichtung der eingangs genannten Art weiter zu verbessern.

Dieses Problem wird erfindungsgemäß durch die Schaffung einer Airbageinrichtung mit den Merkmalen des Anspruchs 1 gelöst.

Danach stehen zur Befestigung der Airbageinrichtung an einer Fahrzeugkarosserie, insbesondere am Dachkantenbereich oder einem (Tür-)Brüstungsbereich der Fahrzeugkarosserie oder an einem Fahrzeugsitz oder auch an einer tragenden Komponente der Airbageinrichtung , von der Airbageinrichtung (aus einem flexiblen Material bestehende) Befestigungslaschen ab, die hier insbesondere als separate Laschen an der der Airbageinrichtung, insbesondere an einem Gassackbereich, vorgesehen sind und dort über Verbindungslinien, z.B. durch Nähte und/oder Klebemittel, fixiert sein können. Dabei weisen die Befestigungslaschen als mehrlagige Befestigungslaschen mindestens zwei Lagen auf, von denen je eine über eine Verbindungslinie an jeder der beiden Materiallagen des zugeordneten aufblasbaren Gassackbereiches fixiert ist. Ferner sind die Lagen der Befestigungslasche jeweils mit einem als Befestigungsabschnitt vorgesehenen Endabschnitt um die zugehörige Verbindungslinie geklappt, so dass der Befestigungsabschnitt über die Airbageinrichtung hinausragt und zur Befestigung der Airbageinrichtung an einer Kraftfahrzeugsstruktur dient

Durch die Verwendung flexibler (aus einem flexiblen Material bestehender) Laschen zur Anbindung der Airbageinrichtung an eine Kraftfahrzeugstruktur (genauer an jeweils einer Anbindungsstelle der Fahrzeugstruktur) können durch (unfallbedingte) äußere Kräfte ausgelöste Verschiebungen von Komponenten der Airbageinrichtung sowie durch Aufblasen aufblasbarer Bereiche der Airbageinrichtung auftretende geometrische Änderungen der Airbageinrichtung kompensiert werden. Ferner kann das Auftreten lokaler Kraftspitzen bei einer Krafteinleitung zwischen einer jeweiligen Befestigungslasche und einem zugeordneten Bereich der Airbageinrichtung verhindert werden, indem durch geeignete Ausbildung der Verbindungsstellen zwischen einer jeweiligen Befestigungslasche und der zugeordneten Komponente einer Airbageinrichtung (z. B. durch die Verwendung gekrümmter Verbindungsstellen/Nähte) eine hinreichend großflächige Krafteinleitung sowie eine Krafteinleitung entlang mehrerer Richtungen erreicht wird.

Der Befestigungsabschnitt einer jeweiligen Befestigungslasche kann sich dabei insbesondere unter Krafteinwirkung, also z. B. beim Aufblasen der Airbageinrichtung, relativ zu der Airbageinrichtung bewegen, so dass sich der Winkel der Krafteinleitung zwischen Fahrzeugstruktur und Airbageinrichtung (über die jeweilige Befestigungslasche) variabel an die jeweiligen Kraftverhältnisse anpasst und insbesondere Krafteinleitungen aus unterschiedlichen Richtungen ermöglicht, je nach den Kraftwirkungen im Einzelfall.

Dabei sind die Befestigungslaschen bevorzugt derart anzuordnen, dass sich der jeweilige Befestigungsabschnitt, der durch Umschlagen eines Endabschnittes der jeweiligen Befestigungslasche um eine Verbindungslinie gebildet ist und über den die jeweilige Befestigungslasche an der Fahrzeugstruktur festgelegt ist, bei äußerer Krafteinwirkung (hervorgerufen durch ein Auflasen der Airbageinrichtung) jeweils im Wesentlichen in einer Ebene bewegt, und zwar in einer Ebene, die die Haupterstreckungsebene der zugeordneten Airbageinrichtung bzw. genauer des der jeweiligen Befestigungslasche zugeordneten aufblasbaren Bereiches der Airbageinrichtung bildet.

Die Befestigungsabschnitte ragen dabei insbesondere über eine seitliche Kante bzw. einen seitlichen Rand der Airbageinrichtung (oder genauer des der jeweiligen Befestigungslasche zugeordneten aufblasbaren Bereiches) in Richtung auf die Fahrzeugstruktur hinaus, so dass deren Festlegung an der Fahrzeugstruktur erleichtert wird.

Die Befestigungslaschen werden dabei durch jeweils mindestens einen von den übrigen Komponenten der Airbageinrichtung, insbesondere dem zugeordneten aufblasbaren Bereich, separaten Materialzuschnitt gebildet, der über die besagten Verbindungslinien an der Airbageinrichtung zu fixieren ist.

Nach einer Weiterbildung der Erfindung bilden die beiden Gassacklagen eines aufblasbaren Bereiches der Airbageinrichtung jeweils einen Bestandteil eines einstückigen Gassackteiles (Materialzuschnittes), insbesondere in Form eines Gewebeteiles oder eines Folienteiles, das entlang mindestens einer Faltlinie umgeschlagen ist, so dass sich die beiden Gassacklagen einander gegenüber liegen, wobei die beiden Gassacklagen außerhalb der Faltlinie, zum Beispiel durch Nähen, Verweben oder Kleben, derart aneinander befestigt sind, dass sie einen zu einem Gaskissen aufblasbaren Bereich der Airbageinrichtung definieren.

Entsprechendes gilt für die zwei- oder mehr als zweilagigen Befestigungslaschen, die ebenfalls vorteilhaft aus einem einzelnen einstückigen Materialzuschnitt (bzw. Materialteil) bestehen, welcher zur Bildung einer zwei- oder mehr als zweilagigen Befestigungslasche mindestens ein mal (um eine Faltlinie) gefaltet wird.

Unter einer einstückigen Ausbildung der beiden Gassacklagen bzw. Lagen einer Befestigungslasche wird dabei verstanden, dass die beiden Gassacklagen/ Lagen einer Befestigungslasche unmittelbar jeweils einen Bestandteil eines einheitlichen Materialteiles/Materialzuschnittes bilden, ohne dass zusätzliche Verbindungsmittel, wie zum Beispiel Nähte oder Klebemittel, erforderlich wären, um die beiden Lagen zusammenzuhalten (wobei allerdings durchaus Nähte oder dergl. vorgesehen sein können, um zusätzliche Verbindungsstellen zwischen den besagten Lagen oder mit weiteren Komponenten zu schaffen). Im Fall eines als Gewebeteil ausgebildeten Gassackteiles bilden die beiden Gassacklagen, jeweils in Form einer Gewebelage, beispielsweise je einen Abschnitt eines einheitlichen (durchgehenden) Gewebeteiles. Entsprechendes gilt für eine als Gewebeteil ausgebildete Befestigungslasche.

Zur Schaffung mindestens eines aufblasbaren Bereiches (in Form eines Gaskissens) der Airbageinrichtung, das sich als Kopfschutz vor einer seitlichen Fensterscheibe eines Kraftfahrzeugs erstreckt, werden hier also nicht einfach zwei separate Gassacklagen entlang ihres äußeren Randes miteinander verbunden, sondern die beiden Gassacklagen bilden vielmehr Bestandteile eines einzelnen Gassackteiles, das entlang einer Faltlinie derart umgeschlagen ist, dass die beiden Gassacklagen zur Bildung eines aufblasbaren Bereiches der Airbageinrichtung übereinander liegen. Bezogen auf den in ein Kraftfahrzeug eingebauten Zustand der Airbageinrichtung liegt dann die eine Gassacklage vor der seitlichen Fahrzeugkarosserie, insbesondere vor einer Fensterscheibe und/oder mindestens einer an der seitlichen Fahrzeugkarosserie vorgesehenen Säule (A-, B-, C- oder D-Säule), während die andere, gegenüber liegende Materiallage dem Fahrzeuginnenraum und insbesondere dem Kopf eines zu schützenden Fahrzeuginsassen zugewandt ist.

Der Zuschnitt (Gewebezuschnitt), auf dem der jeweilige Gassackbereich basiert, wird hier auch als Schmetterlings-Zuschnitt bezeichnet, wobei die beiden Gassacklagen Flügel bilden, die sich an der Faltlinie, also sozusagen dem Körper des Schmetterlings, treffen und dort einstückig miteinander ausgebildet sind.

Bezogen auf den in ein Kraftfahrzeug eingebauten Zustand der Airbageinrichtung verläuft die Faltlinie (als eine obere Kante der Airbageinrichtung) dabei insbesondere entlang einer seitlichen Dachkante eines Kraftfahrzeugs.

Insbesondere wenn eine dem Kopfschutz dienende Airbageinrichtung eine Mehrzahl aufblasbarer Bereiche aufweist, die im aufgeblasenen Zustand jeweils ein Gaskissen bilden, ist nach einem anderen Aspekt der Erfindung, der prinzipiell von einem Schmetterlings-Design der die Gassackbereiche bildenden Gassackteile unabhängig ist, jedoch auch gemeinsam hiermit verwirklichbar ist, vorgesehen, dass die mindestens zwei aufblasbaren Bereiche durch separate aufblasbare Elemente gebildet werden, die zur Bildung einer einheitlichen Airbageinrichtung in Form einer Kopfschutzvorrichtung miteinander verbunden sind und die z.B. miteinander in Strömungsverbindung stehen, so dass das Gas von dem einen aufblasbaren Element in das andere aufblasbare Element strömen kann.

Unter zwei separaten aufblasbaren Elementen werden dabei zwei aufblasbare Elemente einer Airbageinrichtung verstanden, die unabhängig voneinander, also z.B. auch bei beliebiger räumlicher oder zeitlicher Trennung, zu jeweils einem mittels Gas aufblasbaren Element (Gassackbereich) gefertigt werden können und die im Anschluss durch Verbindung mittels eines geeigneten Verbindungselementes zu einer Airbageinrichtung zusammenfassbar sind. D. h., die beiden aufblasbaren Elemente werden gebildet durch zwei separate Gaskissen, die nicht einstückig miteinander verbunden sind, sondern die durch ein weiteres, (separates) Verbindungselement miteinander verbunden werden.

Nach diesem Erfindungsaspekt kann eine Airbageinrichtung nach einem Baukastenprinzip bzw. in Modulbauweise aus einer Vielzahl einzelner Komponenten zusammengesetzt werden, die wiederum jeweils so ausgebildet sind, dass sie sich mit möglichst geringem Materialverlust zuschneiden lassen, zum Beispiel durch Ausstanzen aus einer Gewebebahn.

Als Modulteile, die zum Aufbau einer Airbageinrichtung herangezogen werden können, sind insbesondere Gassacklagen zur Bildung aufblasbarer Gassackbereiche, Verbindungskanäle zur Verbindung der Gassackbereiche, Befestigungslaschen zur Befestigung der Airbageinrichtung an der Kraftfahrzeugkarosserie und Spannbänder zum definierten Verspannen der Airbageinrichtung in aufgeblasenem Zustand vorgesehen. Weiterhin können modulare Komponenten zur Aufnahme und zum Halten eines Gasgenerators sowie Gasleit- und Flammschutzelemente vorgesehen sein.

Hierdurch lässt sich eine Airbageinrichtung aus einer Mehrzahl standardisierter Komponenten zusammensetzen und dabei die jeweilige Zusammensetzung derart variieren, dass mit einer begrenzten Anzahl standardisierter Komponenten eine große Designvielfalt herzustellender Airbageinrichtungen realisierbar ist. So können etwa bei unterschiedlichen Varianten eines Fahrzeugtyps, wie z.B. Stufenheckvariante einerseits und Schrägheckvariante andererseits, für den (entlang der Fahrzeuglängsachse betrachtet) vorderen Teil einer dem Kopfschutz dienenden Airbageinrichtung stets dieselben Komponenten für die Airbageinrichtung verwendet werden, während der hintere Teil entsprechend der jeweiligen Fahrzeug-Variante variiert wird.

Gemäß einer Ausführungsform der Erfindung sind die einzelnen aufblasbaren Elemente, die die aufblasbaren Bereiche der Airbageinrichtung bilden, über separate Verbindungskanäle miteinander verbunden, die jeweils mit den aufblasbaren Elementen in Verbindung stehen. Nach einem anderen Aspekt der Erfindung sind die aufblasbaren Elemente über Verbindungsabschnitte gasleitend miteinander verbunden, die von den aufblasbaren Elementen jeweils abstehen und beispielsweise einstückig mit diesen ausgebildet sind. In bzw. an einem jeweiligen Verbindungsbereich, ausgebildet als Verbindungskanal oder gebildet durch Verbindungsabschnitte, kann dabei jeweils noch ein zusätzliches Verbindungsrohr angeordnet sein, um eine Strömungsverbindung zwischen aufblasbaren Bereichen der Airbageinrichtung herzustellen.

Dabei können die zur Bildung der aufblasbaren Elemente und von Verbindungsbereichen, Befestigungslaschen sowie ggf. Spannbändern usw. vorgesehenen Komponenten jeweils in einer Mehrzahl unterschiedlicher Größen und Geometrien bereitgehalten werden, aus denen dann für ein bestimmtes Anforderungsprofil bzw. einen bestimmten Kraftfahrzeugtyp jeweils die geeigneten ausgewählt werden.

Ferner können die besagten Komponenten einerseits in gefaltetem Zustand, und gegebenenfalls umgeben von einer Aufnahme- bzw. Schutzhülle, bereitgehalten werden, oder es wird andererseits aus den bereitgehaltenen Komponenten zunächst eine komplette Kopfschutzvorrichtung zusammengefügt, bevor diese gefaltet und in einer Aufnahme (Hülle) verstaut wird.

Die einzelnen (z.B. durch separate aufblasbare Elemente gebildeten) als Kopfschutzvorrichtung dienenden aufblasbaren Bereiche der Airbageinrichtung erstrecken sich - bezogen auf den in ein Kraftfahrzeug eingebauten Zustand der Airbageinrichtung - in vertikaler Richtung so weit, dass sie einen effektiven Kopfschutz für einen Fahrzeuginsassen gewährleisten, also beispielsweise im Wesentlichen entlang der gesamten vertikalen Ausdehnung einer seitlichen Fensterscheibe. Die Verbindungskanäle bzw. Verbindungsabschnitte, über die benachbarte aufblasbare Bereiche der Airbageinrichtung miteinander in Verbindung stehen, können demgegenüber eine deutlich geringere Ausdehnung entlang der vertikalen Fahrzeugachse aufweisen, insbesondere wenn diese entlang eines Bereiches der Kraftfahrzeugkarosserie verlaufen, an dem nicht mit dem Aufprall des Kopfes oder Oberkörpers eines Fahrzeuginsassen zu rechnen ist. Hierdurch lässt sich der Materialaufwand weiter reduzieren.

Zur Verbindung der einzelnen Komponenten der Airbageinrichtung kommen unterschiedliche Fügeverfahren in Betracht, neben dem Vernähen von Gewebeteilen insbesondere auch das Verkleben sowie das formschlüssige Verbinden einzelner Komponenten durch Zusammenstecken, wobei zusätzlich auch eine (formschlüssige) Verbindung mit Bereichen der Fahrzeugstruktur hergestellt werden kann. Weiterhin können Schellen oder Bandagen oder sonstige Verbindungsmittel zum Fügen der einzelenen Komponenten der Airbageinrichtung verwendet werden.

Die zur Befestigung der Airbageinrichtung an einer Fahrzeugstruktur vorgesehenen Befestigungslaschen werden vorteilhaft als separate Komponenten an den aufblasbaren Bereichen und/oder Verbindungsabschnitten bzw. -kanälen fixiert, und zwar z.B. über Nähte. Die Fixierung erfolgt in der Weise, dass die Befestigungslaschen um die Verbindungsnähte umgeschlagen werden können und dadurch mit einem Befestigungsabschnitt in der gewünschten Weise von der Airbageinrichtung abstehen (und über diese hinausragen) und sodann mit ihrem von der Airbageinrichtung abstehenden Befestigungsabschnitt, z.B. über eine Befestigungsöffnung, an der Fahrzeugstruktur festlegbar sind.

Die Verbindungslinien (insbesondere -nähte) können dabei im Wesentlichen parallel zu einer Kante einer Komponente der Airbageinrichtung verlaufen, in deren Bereich die jeweilige Befestigungslasche angeordnet ist, oder schräg und somit geneigt zu der besagten Kante; oder sie können einen gekrümmten Verlauf aufweisen. Gekrümmte Verbindungslinien bzw. -nähte, insbesondere ausgebildet als bogenförmige Abnäher, ermöglichen eine flexible Winkelausrichtung der Befestigungslaschen, in Abhängigkeit davon, wie der Befestigungsabschnitt bezüglich des jeweiligen Abnähers umgeschlagen ist. Dies kann wiederum von den (zeitlich veränderlichen) Kraftverhältnissen an einer jeweiligen Befestigungslasche abhängen, insbesondere so, dass sich diese jeweils optimal unter den aktuell wirkenden Kräften ausrichtet und eine optimal Kraftweiterleitung gewährleistet ist.

In jedem der vorgenannten Fälle kann vorgesehen sein, dass eine jeweilige Befestigungslasche mehr zwei Lagen aufweist, die jeweils an einer Materiallage eines aufblasbaren Bereiches bzw. eines Verbindungskanals oder -abschnittes der Airbageinrichtung fixiert sind. Durch Verwendung von mehr als zwei Lagen der Befestigungslasche kann dabei durch Redundanz zusätzliche Sicherheit in der Fixierung der Airbageinrichtung über die Befestigungslaschen erreicht werden.

Ein zum Befüllen der aufblasbaren Bereiche der Airbageinrichtung dienender Gasgenerator kann innerhalb oder außerhalb der Airbageinrichtung angeordnet sein, wobei im letztgenannten Fall der Gasgenerator mit der Airbageinrichtung über eine gasführende Verbindungsleitung in Strömungsverbindung zu bringen wäre. Selbstverständlich können auch mehrere Gasgeneratoren vorgesehen sein, um die Airbageinrichtung schnell aufblasen zu können.

Bei Anordnung mindestens eines Gasgenerators innerhalb der Airbageinrichtung kommt neben der Anordnung eines Gasgenerators in einem aufblasbaren Bereich insbesondere auch eine (mittige) Anordnung zwischen zwei aufblasbaren Bereichen infrage, zum Beispiel in einem Verbindungsbereich, über den benachbarte aufblasbare Bereiche in Strömungsverbindung stehen.

Ein dem Gasgenerator zugeordnetes Zündkabel kann dann beispielsweise entlang der Erstreckungsrichtung eines jeweiligen Verbindungsbereiches aus diesem herausgeführt werden, wobei mittels einer äußeren Bandage eine Abdichtung erreicht wird.

Als weitere Komponente einer Airbageinrichtung, insbesondere bei Anordnung eines Gasgenerators zwischen zwei (benachbarten) aufblasbaren Elmenten, kann eine den Gasgenerator umgebende (z.B. rohrförmige und im Wesentlichen formstabile) Hülle als Gasstromverteiler dienen, mit der ein aus dem Gasgenerator austretender Gasstrom so aufgeteilt wird, dass er sich auf die aufblasbaren Bereiche des Gassackes verteilt.

Sofern es zweckmäßig sein sollte, die einzelnen aufblasbaren Bereiche des Gassackes mit unterschiedlichen Gasmengen zu befüllen, können die Austrittsöffnungen, durch die hindurch Gas aus dem Gasstromverteiler in die aufzublasenden Gassackbereiche strömen kann, hinsichtlich ihres Austrittsquerschnittes so gewählt werden, dass unterschiedlich starke Gasströmungen in die einzelnen Gassackbereiche einströmen. Um Gassackmaterial in der Umgebung des Gasgenerators vor Beschädigung durch aus dem Gasgenerator austretende Gase zu schützen, kann eine Flammschutzvorrichtung vorgesehen sein, zum Beispiel in Form eines Schutzlagenwickels oder in Form eines Gewebeschlauches mit einer hitzebeständigen Materiallage bzw. Beschichtung, welcher bzw. welche den Gasgenerator umgibt.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung einzelner Komponenten eines Baukastens, aus dem eine Airbageinrichtung zum Schutz des Kopfes eines Fahrzeuginsassen zusammengesetzt werden kann;
- Fig. 2: ein Beispiel einer aus Komponenten gemäß Figur 1 zusammengesetzten Airbageinrichtung;
- Fig. 3: eine detailliertere Darstellung von Komponenten einer Airbageinrichtung, die zur Bildung einer Kopfschutzvorrichtung zusammengesetzt werden können;
- Fig. 4a: ein drittes Ausführungsbeispiel von Komponenten einer Airbageinrichtung, die zu einer Kopfschutzvorrichtung zusammengesetzt werden können;
- Fig. 4b: eine als Kopfschutz dienende Airbageinrichtung aus den Komponenten der Figur 4a;
- Fig. 5a: ein viertes Ausführungsbeispiel von Komponenten einer Airbageinrichtung, die zu einer Kopfschutzvorrichtung zusammengesetzt werden können;
- Fig. 5b: eine als Kopfschutz dienende Airbageinrichtung aus den Komponenten der Figur 5a;

- Fig. 6a: zwei Module einer als Kopfschutzvorrichtung dienenden Airbageinrichtung, die zusammensteckbar sind;
- Fig. 6b: die Module aus Figur 6a im zusammengesteckten Zustand;
- Fig. 7a: eine Abwandlung der Anordnung aus Figur 6a;
- Fig. 7b: eine Abwandlung der Anordnung aus Figur 6b;
- Fig. 8: ein weiteres Beispiel für das Zusammenstecken zweier Komponenten einer nach einem Baukastenprinzip zusammensetzbaren Airbageinrichtung;
- Fig. 9a-9c: drei Ausführungsbeispiele hinsichtlich der Verwendung von Verbindungsmitteln zum Fügen von Komponenten einer nach einem Baukastensystem zusammensetzbaren Airbageinrichtung;
- Fig. 10a-10c: ein Ausführungsbeispiel für die Anordnung und Fixierung von Befestigungslaschen an einer Airbageinrichtung;
- Fig. 10d-10e: zwei Varianten des Ausführungsbeispieles aus den Figuren 10a bis 10c auf der Grundlage der Darstellung gemäß Figur 10a;
- Fig. 11a-11c: eine erste Abwandlung des Ausführungsbeispiels aus den Figuren 10a bis 10c;
- Fig. 11d-11g: eine Variante des Ausführungsbeispieles aus den Figuren 11a bis 11 c;

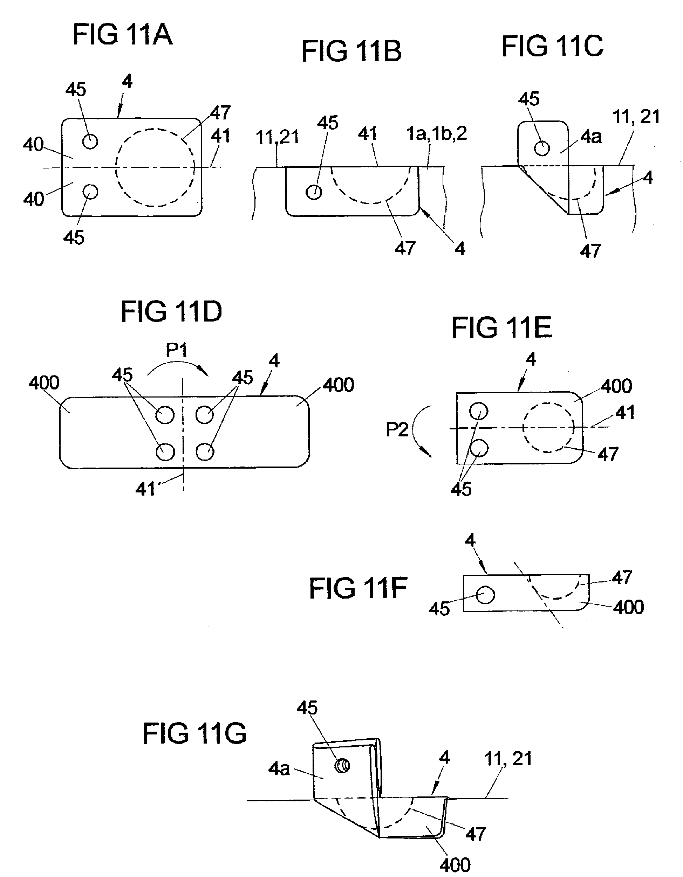

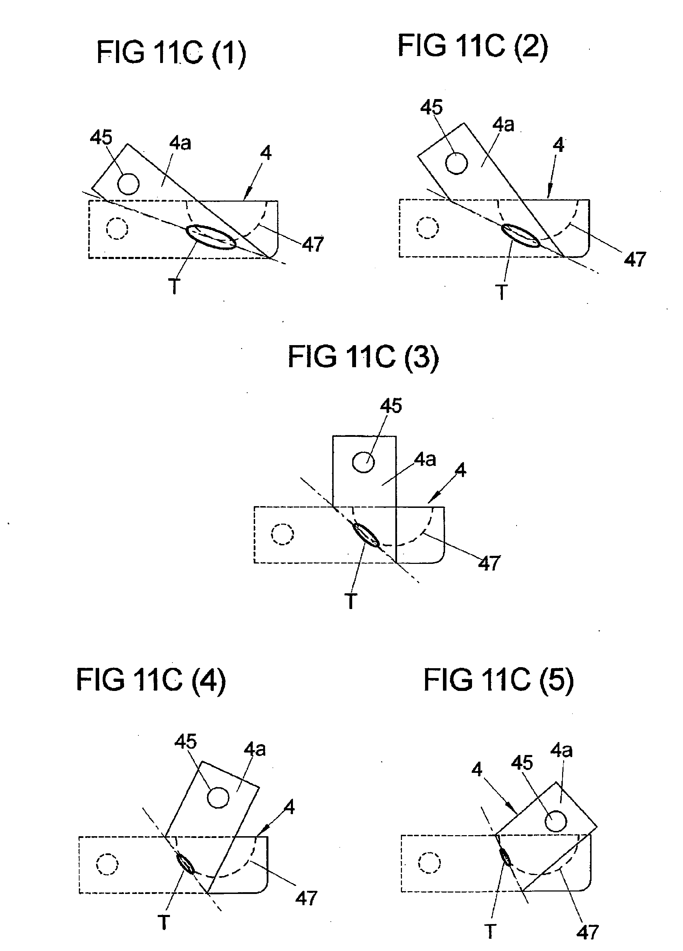

- Fig. 11 c(1) -11 c(5): die Anordnung aus Figur 11 c bei unterschiedlichen Belastungen mit äußeren Kräften;

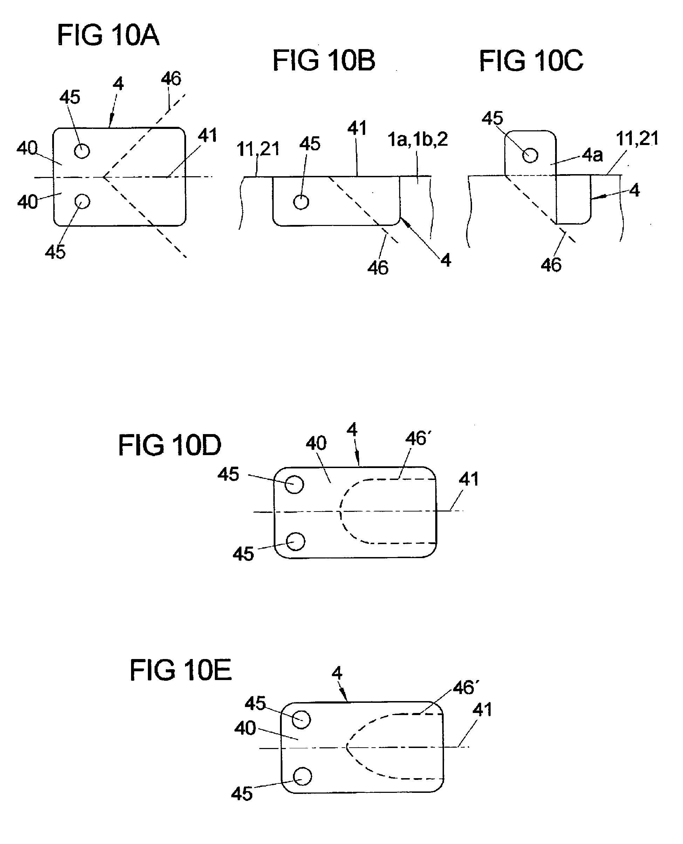

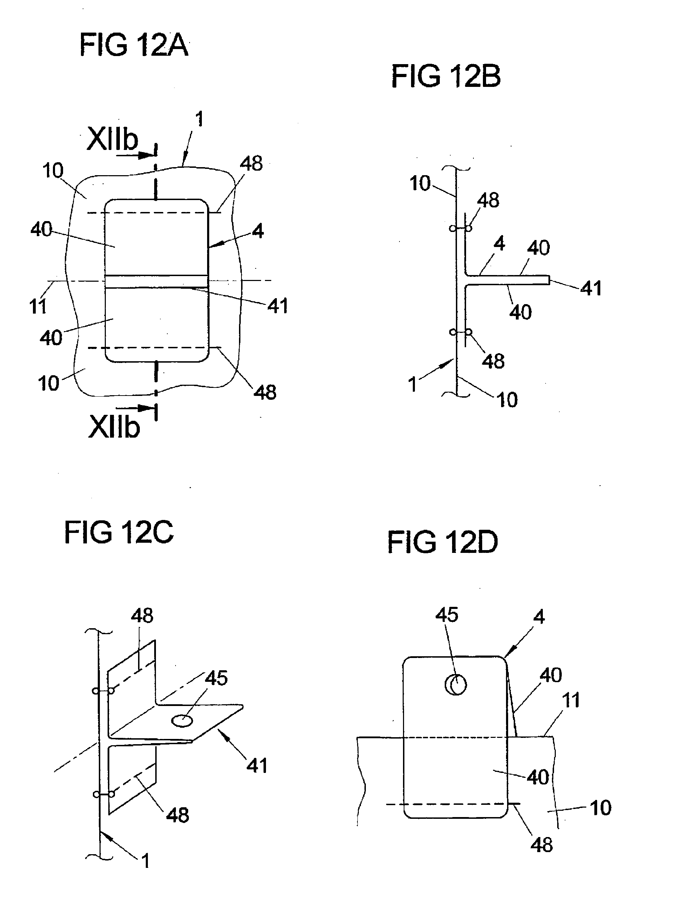

- Fig. 12a-12d: eine zweite Abwandlung des Ausführungsbeispieles aus den Figuren 10a bis 10c;

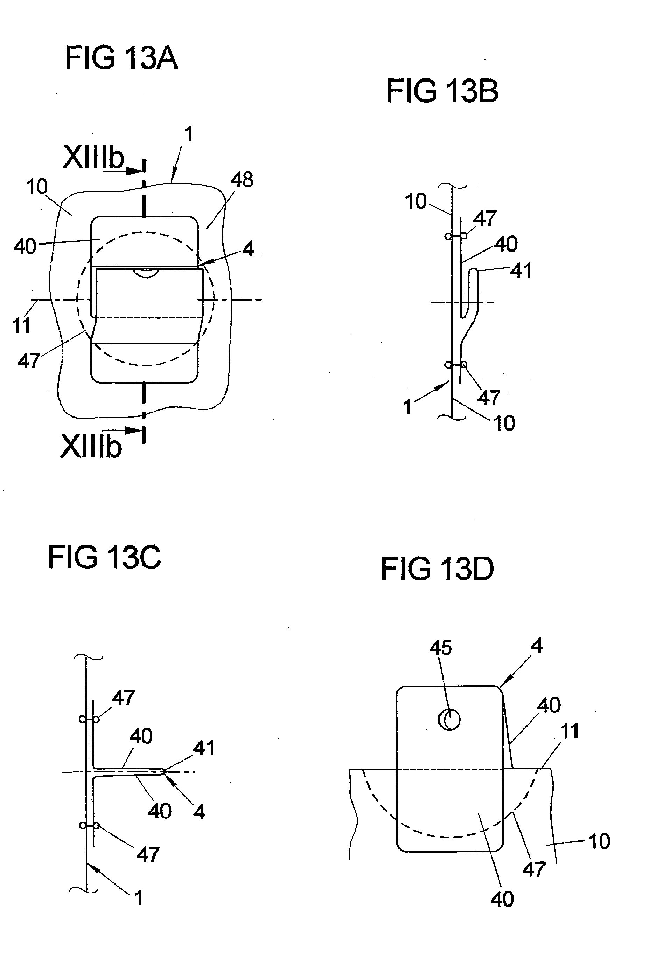

- Fig.13a-13d: eine dritte Abwandlung des Ausführungsbeispieles aus den Figuren 10a bis 10c;

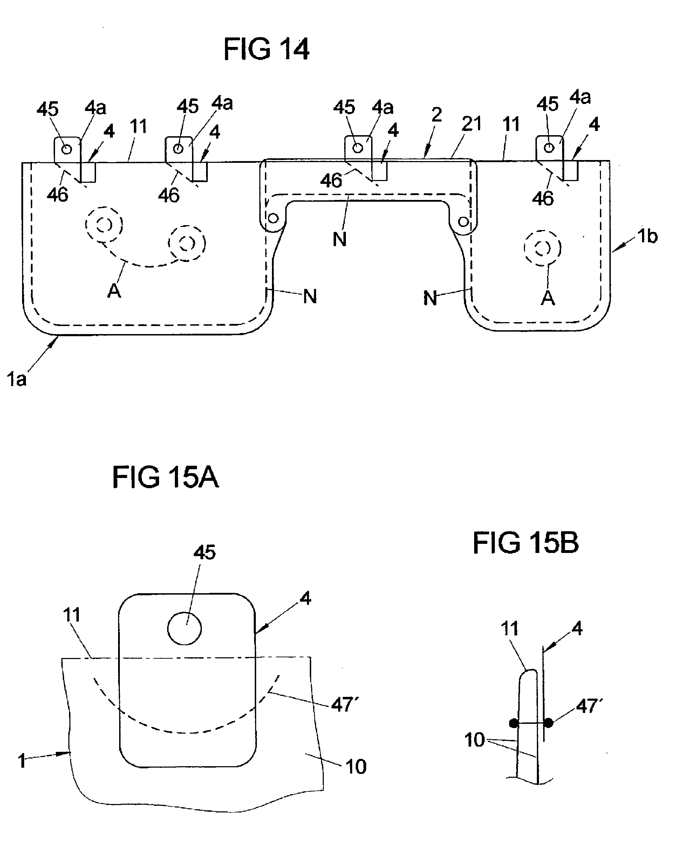

- Fig. 14: eine als Kopfschutzvorrichtung dienende Airbageinrichtung mit Befestigungslaschen der in den Figuren 10a bis 10c dargestellten Art;
- Fig. 15a, 15b: ein weiteres Ausführungsbeispiel für die Anordnung und Fixierung von Befestigungslaschen an einer Airbageinrichtung;

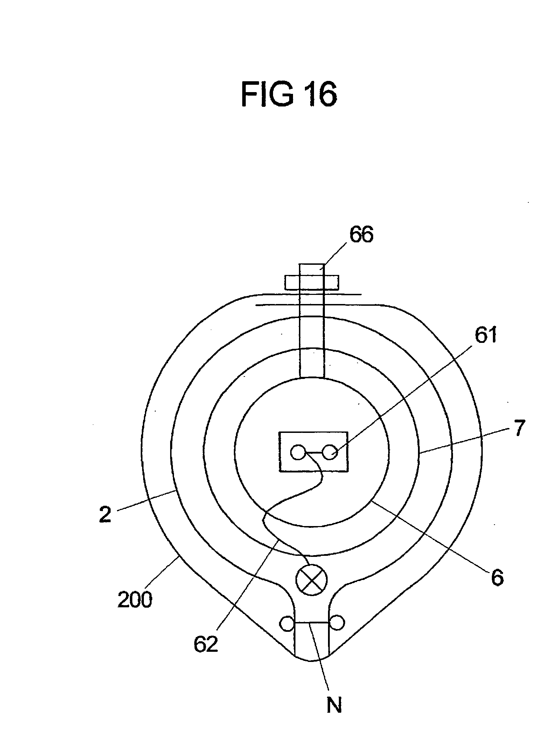

- Fig. 16: ein Beispiel für die Anordnung eines Gasgenerators in einem Verbindungskanal, der zwei aufblasbare Bereiche einer als Kopfschutzvorrichtung dienenden Airbageinrichtung miteinander verbindet;

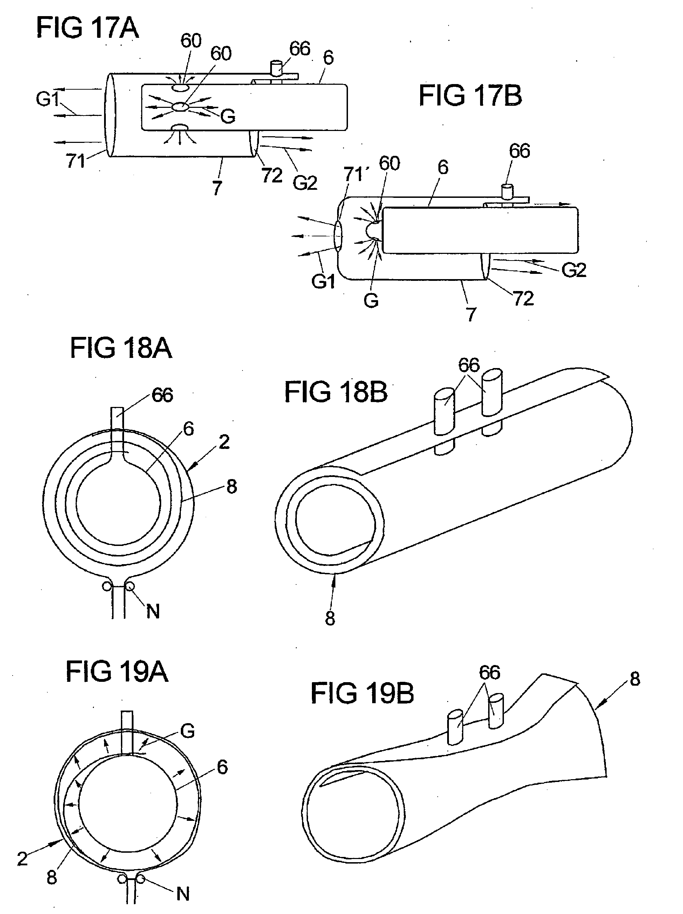

- Fig. 17a: ein erstes Ausführungsbeispiel eines tonnenförmigen Gasstromverteilers zur Aufteilung des aus einem Gasgenerator der Airbageinrichtung austretenden Gasstromes;
- Fig. 17b: ein zweites Ausführungsbeispiel eines tonnenförmigen Gasstromverteilers zur Aufteilung des aus einem Gasgenerator der Airbageinrichtung austretenden Gasstromes;
- Fig. 18a, 18b: ein erstes Ausführungsbeispiel einer gewickelten Schutzlage zum Schutz des Gewebes eines Verbindungskanals der Airbageinrichtung vor aus einem Gasgenerator ausströmenden heißen Gasen;
- Fig. 19a, 19b: die Anordnung aus den Figuren 18a und 18b nach dem Austreten von Gas aus einem Gasgenerator;

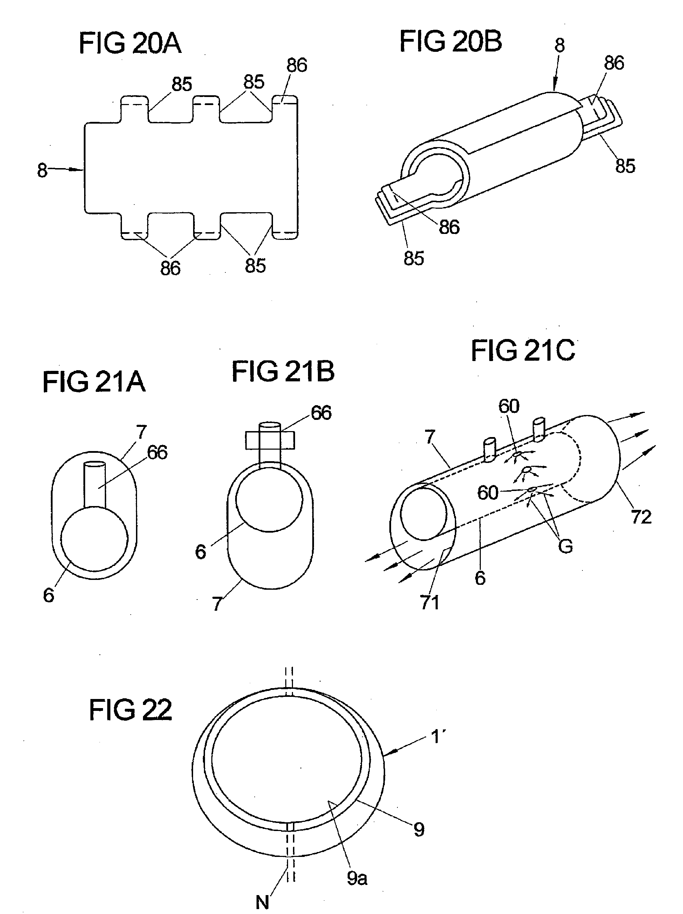

- Fig. 20a, 20b: ein zweites Ausführungsbeispiel einer gewickelten Schutzlage zum Schutz des Gewebes eines Verbindungskanals der Airbageinrichtung vor aus einem Gasgenerator ausströmenden heißen Gasen;
- Fig. 21a-21c: eine gleichzeitig als Gasstromverteiler dienende, im Querschnitt ovale Aufnahme für einen Gasgenerator;
- Fig. 22: einen Querschnitt durch einen Verbindungskanal einer Airbageinrichtung mit einem darin aufgenommenen Gewebeschlauch mit hitzebeständiger Materiallage.

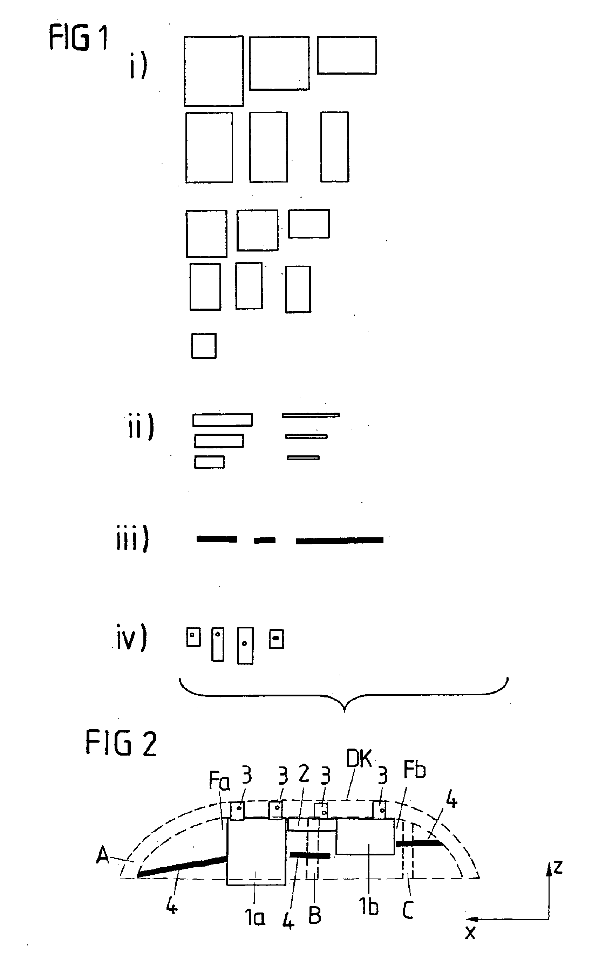

Figur 1 zeigt einen Bausatz aus Komponenten, die zur Herstellung einer Airbageinrichtung in Form einer Kopfschutzeinrichtung für einen Fahrzeuginsassen verwendbar sind.

Unter i) sind dabei Materiallagen bzw. Materialteile (Gassacklagen/Gassackteile) unterschiedlicher Größe und Geometrie dargestellt, die zur Herstellung eines aufblasbaren Bereiches der Airbageinrichtung dienen können, der im aufgeblasenen Zustand ein Gaskissen bildet. Bei den Gassacklagen kann es sich insbesondere um Gewebelagen handeln. Aufgrund der weitgehend rechteckigen Zuschnitte der Gassacklagen lassen sich diese mit minimalem Verschnitt aus einer Materialbahn, wie zum Beispiel einer Geweberolle, ausstanzen.

Nach ii) sind unterschiedliche weitere Material- bzw. Gewebelagen dargestellt, die zur Bildung von Verbindungskanälen dienen können, über die benachbarte aufblasbare Bereiche einer Gassackanordnung (strömungs-)verbindbar sind.

Unter iii) sind mehrere Spannbänder dargestellt, die der Verspannung der Airbageinrichtung dienen können, und die hierzu beispielsweise an unterschiedlichen Elementen der Airbageinrichtung und/oder an einer Fahrzeugstruktur angreifen.

Bildabschnitt iv) zeigt schließlich mehrere Befestigungslaschen, die zur Befestigung einer Airbageinrichtung an einer Kraftfahrzeugstruktur verwendbar sind.

Aus den in Figur 1 dargestellten Komponenten in Form von Materiallagen für aufblasbare Gassackbereiche und für Verbindungskanäle zwischen aufblasbaren Gassackbereichen sowie in Form von Spannbändern und Befestigungslaschen werden zur Herstellung einer bestimmten Airbageinrichtung jeweils diejenigen ausgewählt, die den Anforderungen an eine bestimmte Airbageinrichtung - etwa abhängig vom Fahrzeugtyp, in dem die Airbageinrichtung eingesetzt werden soll - genügen.

Figur 2 zeigt eine Airbageinrichtung in Form einer Kopfschutzvorrichtung, die aus Komponenten der in Figur 1 dargestellten Art zusammengesetzt ist, wobei jene Komponenten zur Bildung einer einheitlichen Airbageinrichtung beispielsweise durch Vernähen und/oder Zusammenstecken miteinander verbunden sind.

Gemäß Figur 2 weist die resultierende Airbageinrichtung zwei aufblasbare Bereiche 1 a, 1b auf, die - bezogen auf den in ein Kraftfahrzeug eingebauten Zustand - entlang der Fahrzeuglängsachse x voneinander beabstandet sind und die über einen Verbindungskanal 2 miteinander in Strömungsverbindung stehen. Die aufblasbaren Bereiche 1 a, 1b sowie der Verbindungskanal 2 der Airbageinrichtung werden dabei gebildet durch Materiallagen bzw. Materialteile der in Figur 1 unter i) und ii) dargestellten Art.

Ferner stehen von den aufblasbaren Bereichen 1 a, 1 b der Airbageinrichtung sowie von deren Verbindungskanal 2 Befestigungslaschen 3 ab, bei denen es sich um von den aufblasbaren Bereichen 1 a, 1b und dem Verbindungskanal 2 separate Elemente handelt, die in geeigneter Weise - wie weiter unten noch näher beschrieben werden wird - an den vorgenannten Komponenten 1a, 1b, 2 der Airbageinrichtung fixiert sind. Schließlich sind mehrere Spannbänder 4 vorgesehen, von denen eines zur Verbindung der beiden aufblasbaren Bereiche 1a, 1b der Airbageinrichtung dient und zwei weitere zur Verbindung je eines aufblasbaren Bereiches 1 a, 1 b der Airbageinrichtung mit einer Fahrzeugstruktur vorgesehen ist, um die Airbageinrichtung in aufgeblasenem Zustand bezüglich der Fahrzeugstruktur verspannen zu können und hierdurch optimale Bedingungen für das Auffangen eines Fahrzeuginsassen in einem Crash-Fall zu schaffen.

Die in Figur 2 dargestellte Airbageinrichtung wird aus einem Bausatz vorgefertigter Komponenten gebildet, bei denen es sich einerseits um Materiallagen bzw. Materialteile (Gewebelagen/Gewebeteile) zur Bildung aufblasbarer Bereiche 1a, 1b sowie von Verbindungskanälen 2 der Airbageinrichtung handelt. Weiterhin sind als hiervon separate Komponenten die Befestigungslaschen 3 und die Spannbänder 4 Bestandteile des zur Herstellung der in Figur 2 gezeigten Airbageinrichtung dienenden Bausatzes.

Anhand Figur 2 wird ferner deutlich, dass sich die beiden aufblasbaren Bereiche 1 a, 1 b der Airbageinrichtung entlang der vertikalen Fahrzeugachse z über eine größere Ausdehnung erstrecken als der zwischen jenen beiden aufblasbaren Bereichen 1a, 1b liegende Verbindungskanal 2. Hierdurch bilden die beiden aufblasbaren Bereiche 1a, 1b der Airbageinrichtung jeweils ein großflächiges Gaskissen zum Schutz eines Fahrzeuginsassen in einem Crash-Fall, mit dem insbesondere mindestens eine seitliche Fensterscheibe eines Kraftfahrzeugs weitgehend überdeckbar ist. Der Verbindungskanal 2 weist demgegenüber eine deutlich geringere Ausdehnung entlang der vertikalen Fahrzeugachse z auf. Verbindungskanäle 2 sind daher - bezogen auf den in ein Kraftfahrzeug eingebauten Zustand der Airbageinrichtung - vorteilhaft an Stellen positioniert, an denen nicht mit dem Aufprall eines Fahrzeuginsassen zu rechnen ist.

In Figur 2 sind außerdem Teile der seitlichen Struktur eines Kraftfahrzeugs, nämlich zwei seitliche Fensterscheiben Fa, Fb sowie eine A-, B- und C-Säule, in gestrichelten Linien angedeutet, die von der Airbageinrichtung (teilweise) überdeckt werden. Dabei überdecken die aufblasbaren Bereiche 1a, 1b der Airbageinrichtung solche Teile der seitlichen Karosseriestruktur, also der Fensterscheiben Fa, Fb sowie der A-, B- und C-Säule, mit denen der Kopf eines Fahrzeuginsassen in einem Crash-Fall in Kollision geraten kann.

Konkret bestehen die beiden als voneinander separate, aufblasbare Elemente ausgebildeten aufblasbaren Bereiche 1a, 1b der Airbageinrichtung gemäß Figur 2 jeweils aus zwei Material- bzw. Gewebelagen der in Figur 1 unter i) dargestellten Art, die (zum Beispiel durch Nähte) so miteinander verbunden sind, dass sie jeweils einen mit Gas befüllbaren aufblasbaren Bereich der Airbageinrichtung definieren, wobei die eine Materiallage der seitlichen Fahrzeugstruktur, also den Fensterscheiben Fa, Fb sowie den strukturbildenden Säulen A, B, C, zugewandt ist und die andere gegenüber liegende Materiallage dem Fahrzeuginnenraum, also insbesondere einem zu schützenden Fahrzeuginsassen, zugewandt ist.

Alternativ können die beiden Material- bzw. Gewebelagen, die jeweils einen aufblasbaren Bereich bilden, auch Bestandteile eines einstückigen Materialzuschnittes bzw. Materialteiles sein, wie weiter unten noch näher erläutert werden wird.

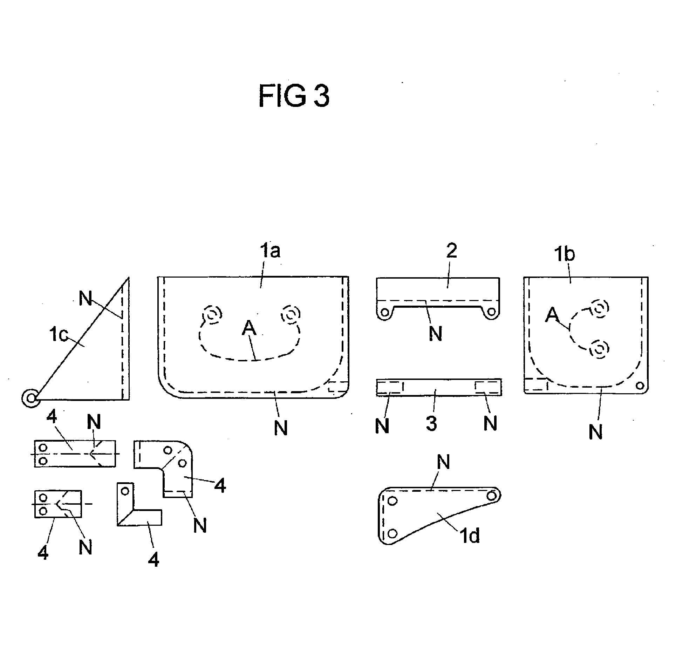

Figur 3 zeigt eine Anordnung gemäß Figur 2 in etwas detaillierterer Darstellung. Hier sind an den die Gassackbereiche 1a, 1b bildenden aufblasbaren Elementen sowie an dem Verbindungskanal 2, einem Spannband 3 und an den Befestigungslaschen 4 jeweils Nähte N erkennbar, die der Befestigung der einzelnen Komponenten 1a, 1b, 2, 3, 4 der Airbageinrichtung untereinander dienen können.

Die Nähte N an den aufblasbaren Bereichen 1a, 1b sowie am Verbindungskanal 2 dienen dabei auch dazu, Material- bzw. Gewebelagen miteinander zu verbinden, aus denen der jeweilige aufblasbaren Bereich 1 a, 1 b bzw. der Verbindungskanal 2 besteht. Typischerweise sind dies zwei Gewebelagen, von denen die eine - bezogen auf den in ein Kraftfahrzeug eingebauten Zustand der Airbageinrichtung - der seitlichen Karosseriestruktur eines Kraftfahrzeugs, also insbesondere einer Fensterscheibe und/oder einer der strukturbildenden Säulen, zugewandt ist und von denen die andere dem Fahrzeuginnenraum, und somit insbesondere dem Kopf eines zu schützenden Fahrzeuginsassen, zugeordnet ist.

Weiterhin sind in Figur 3 Abnäher A erkennbar, entlang derer die beiden Material- bzw. Gewebelagen, welche die aufblasbaren Bereiche 1a, 1b der Airbageinrichtung bilden, zur Bildung von Einschnürungen miteinander verbunden sind. Hiermit wird der jeweilige aufblasbare Bereich 1 a, 1 b im aufgeblasenen Zustand so strukturiert, dass ein optimaler Schutz eines Fahrzeuginsassen gewährleistet ist.

Außerdem ist gemäß Figur 3 ein zusätzlicher (dritter, nicht aufblasbarer) Bereich 1c (in Form eines Segels) vorgesehen, der aus dreieckförmigem Material- bzw. Gewebezuschnitten gebildet ist und sich daher insbesondere zum Überdecken eines Dreiecksfensters eines Kraftfahrzeugs eignet.

Weiterhin ist in Figur 3 noch ein zusätzlicher nicht aufblasbarer Bereich 1 d, in Form eines weiteren Segels, dargestellt, der fakultativ unterhalb des Verbindungskanals 2 angeordnet werden kann, um dort einen der aufblasbaren Bereiche 1a, 1b der Airbageinrichtung mit der Fahrzeugstruktur zu verbinden. Hierdurch kann ein Aufbäumen des zugeordneten Randabschnittes des entsprechenden aufblasbaren Bereiches 1a, 1b beim Aufblasen vermieden werden, durch welches ein Wandabschnitt des besagten aufblasbaren Bereiches 1a, 1b in den Gasstrahl eines zum Aufblasen verwendeten Gasgenerators geraten könnte. Hierdurch lässt sich bei Verwendung heißer Gase zum Aufblasen der Airbageinrichtung, insbesondere mittels eines pyrotechnischen Gasgenerators, eine Beschädigung ansonsten gefährdeter Wandabschnitte der aufblasbaren Bereiche 1 a, 1 b verhindern.

In solchen Darstellungen, in denen die Komponenten der Airbageinrichtung zumindest teilweise im nicht zusammengefügten Zustand gezeigt sind, wie zum Beispiel der vorstehend beschriebenen Figur 3, der Figur 4a und der Figur 5a, weisen dort gezeigte Abnäher A und Nähte N jeweils auf die Stellen hin, an denen sich nach dem Fügen der einzelnen Komponenten der Airbageinrichtung die entsprechenden Abnäher A und Nähte N befinden werden. Diese sind in dem in den Figuren 3, 4a und 5a gezeigten Zustand (teilweise) noch nicht an den einzelnen Komponenten der Airbageinrichtung vorhanden.

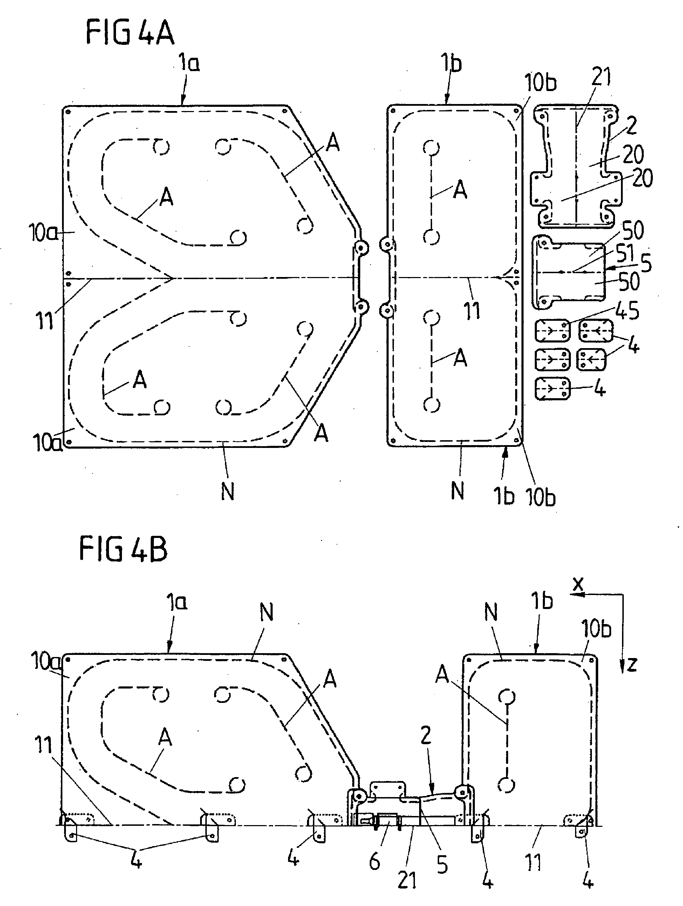

In den Figuren 4a und 4b ist ein weiteres Ausführungsbeispiel einer als Kopfschutz dienenden Airbageinrichtung dargestellt, wobei in Figur 4a die Bestandteile jener Airbageinrichtung einzeln gezeigt sind und Figur 4b die Airbageinrichtung in zusammengebautem Zustand zeigt.

Eine Besonderheit der in den Figuren 4a und 4b dargestellten Anordnung liegt darin, dass einteilige Materialzuschnitte bzw. Materialteile (insbesondere einteilige Gewebezuschnitte(Gewebeteile), welche aufblasbare Gassackbereiche 1a, 1b, einen Verbindungskanal 2 zwischen jenen Gassackbereichen 1a, 1b sowie eine Aufnahme 5 für einen Gasgenerator 6 bilden, jeweils in einem Schmetterlings-Design ausgeführt sind. Das heißt, die einzelnen Zuschnitte/Materialteile umfassen jeweils zwei Materiallagen bzw. genauer Gewebelagen 10a, 10b, 20 bzw. 50, die im Wesentlichen identisch, nämlich spiegelsymmetrisch bezüglich einer Symmetrieachse 11, 21 bzw. 51, ausgeführt sind, entlang der die beiden Lagen 10a, 10b, 20, 50 miteinander verbunden sind. Die beiden Materiallagen bilden also im jeweiligen Materialzuschnitt quasi die Flügel eines Schmetterlings, die entlang der jeweiligen Symmetrieachse 11, 21, 51 einstückig miteinander ausgebildet sind.

Auch Befestigungslaschen 4, die zur Befestigung der Airbageinrichtung an einer Fahrzeugstruktur, insbesondere im Dachkantenbereich vorgesehen sind, werden hier spiegelsymmetrisch ausgebildet. Weitere Einzelheiten zu jenen jeweils mindestens eine Befestigungsöffnung 45 aufweisenden Befestigungslaschen 4 werden weiter unten anhand der Figuren 10a bis 15b beschrieben werden.

Wie anhand Figur 4b deutlich wird, ist ein Gasgenerator 6, der zum Aufblasen der beiden entlang der Fahrzeuglängsachse x voneinander beabstandeten aufblasbaren Bereiche 1a, 1b der Airbageinrichtung dient, hier unter Verwendung einer flexiblen Aufnahme 5 im Verbindungskanal 2 angeordnet, der die beiden aufblasbaren Bereiche 1a, 1b gasleitend miteinander verbindet. Einzelheiten zur Anordnung eines Gasgenerators 6 in der Airbageinrichtung, insbesondere in einem Verbindungskanal 2 der Airbageinrichtung, sind in den Figuren 16 bis 22 dargestellt und werden weiter unten anhand dieser erläutert werden.

Wie anhand einer Zusammenschau der Figuren 4a und 4b erkennbar ist, werden die die aufblasbaren Bereiche 1a, 1b sowie den Verbindungskanal 2 bildenden Material- bzw. Gewebezuschnitte einmal um ihre jeweilige Symmetrieachse als Faltlinie 11 bzw. 21 umgeschlagen und anschließend unter der Bildung von Nähten N entlang ihres äußeren Randes miteinander vernäht, so dass sich zwei aufblasbare Bereiche 1a, 1b sowie ein diese beiden (strömungs-)verbindender Verbindungskanal 2 ergeben.

Die Symmetrieachsen bzw. Faltlinien 11, 21 erstrecken sich dabei entlang der seitlichen Dachkante DK, vergleiche Figur 2, eines Kraftfahrzeugs, wenn die in den Figuren 4a und 4b gezeigte Airbageinrichtung in ein solches eingebaut ist. Dementsprechend sind (in einer weiter unten anhand der Figuren 10a bis 15b näher beschriebenen Weise) im Bereich jener Symmetrieachsen bzw. Faltlinien 11, 21 an den aufblasbaren Bereichen 1a, 1b sowie gegebenenfalls an dem Verbindungskanal 2 die Befestigungslaschen 4 fixiert, über die eine Befestigung der Airbageinrichtung am Kraftfahrzeug, insbesondere am seitlichen Dachkantenbereich eines Kraftfahrzeugs erfolgt.

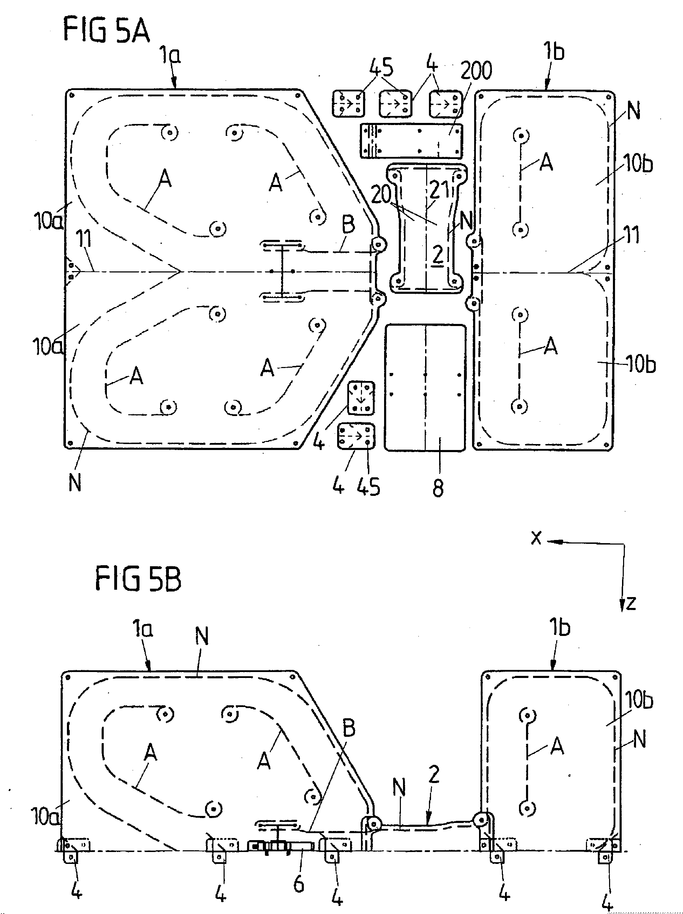

In den Figuren 5a und 5b ist eine Abwandlung des Ausführungsbeispieles aus den Figuren 4a und 4b dargestellt, wobei der wesentliche Unterschied darin besteht, dass ein zum Aufblasen der beiden voneinander beabstandeten aufblasbaren Bereiche 1a, 1b der Airbageinrichtung dienender Gasgenerator 6 nicht im Verbindungskanal 2, sondern in einem der beiden aufblasbaren Bereiche 1 a, 1 b angeordnet ist. Hierzu ist in jenem aufblasbaren Bereich 1a mittels einer Begrenzungsnaht B ein Raum zur Aufnahme des Gasgenerators 6 gebildet.

Weiterhin sind in Figur 5a ein Schutzlagenwickel 8 für den Gasgenerator 6 und eine Bandage 200, jeweils im flach ausgebreiteten Zustand, erkennbar, deren Funktion weiter unten anhand der Figuren 18a bis 20b bzw. 16 näher erläutert werden wird.

Sowohl bei der in den Figuren 4a und 4b als auch bei der in den Figuren 5a und 5b gezeigten Airbageinrichtung können die beiden aufblasbaren Bereiche 1a, 1b der Airbageinrichtung sowie der Verbindungskanal 2 jeweils separat aus einem jeweiligen Material- bzw. Gewebezuschnitt hergestellt werden, indem dieser um die hierfür vorgesehene Achse bzw. Faltlinie geklappt und anschließend die beiden resultierenden, einander gegenüber liegende Materiallagen 10a, 10b bzw. 20 miteinander vernäht oder in sonstiger Weise miteinander verbunden werden, um einen aufblasbaren Gassackbereich bzw. einen Verbindungskanal zu schaffen. Dabei ist unter Fertigungsgesichtspunkten die Verwendung möglichst gerader Nähte vorteilhaft. Anschließend werden diese vorgefertigten Komponenten der Airbageinrichtung miteinander verbunden, zum Beispiel durch Nähen oder auch in sonstiger nachfolgend näher zu beschreibender Art und Weise.

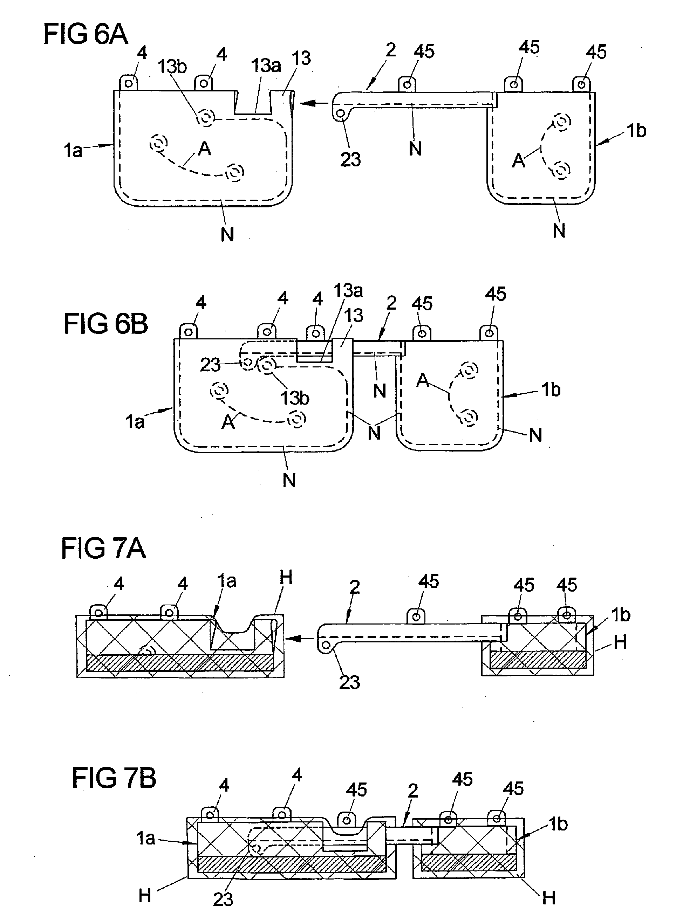

So zeigt Figur 6a eine Anordnung, bei der einerseits ein vorderer aufblasbarer Bereich 1a der Airbageinrichtung sowie andererseits ein hinterer aufblasbarer Bereich 1b der Airbageinrichtung zusammen mit einem zugehörigen Verbindungskanal 2 jeweils ein Modul bilden, das einschließlich hieran fixierter Befestigungslaschen 4 sowie zur Schaffung von Einschnürungen vorgesehener Abnäher A komplett vorgefertigt ist. Diese beiden Module werden anschließend dadurch formschlüssig miteinander verbunden, dass der Verbindungskanal 2 durch eine Schlaufe 13 und eine dahinter gelegene Ausnehmung 13a des ersten aufblasbaren Bereiches 1a geführt wird und mit einer Verbreiterung 23 an seinem vorderen Ende einen hierfür vorgesehenen (ringförmig geschlossenen) Abnäher 13b des ersten aufblasbaren Bereiches 1a hintergreift, vergleiche Figur 6b. Die Schlaufe 13 am ersten aufblasbaren Bereich 1a der Airbageinrichtung dient dabei im fertig montierten Zustand zur definierten Positionierung des Verbindungskanals 2 sowie des ersten aufblasbaren Bereiches 1a zueinander. Zusätzlich können der erste aufblasbare Bereich 1a und der Verbindungskanal 2 über Nähte oder sonstige Verbindungsmittel miteinander verbunden werden.

In den Figuren 7a und 7b ist eine Abwandlung der Anordnung aus den Figuren 6a und 6b dargestellt, wobei der wesentliche Unterschied darin besteht, dass die aufblasbaren Bereiche 1a, 1b der beiden Module jeweils bereits zu einem (länglichen) Gassackpaket zusammengefaltet und als gefaltetes Gassackpaket in einer (schlauchartigen) Schutzhülle H angeordnet werden, bevor eine Verbindung der beiden Module über den in das zweite Modul integrierten Verbindungskanal 2 erfolgt, vergleiche den Übergang von Figur 7a zu Figur 7b.

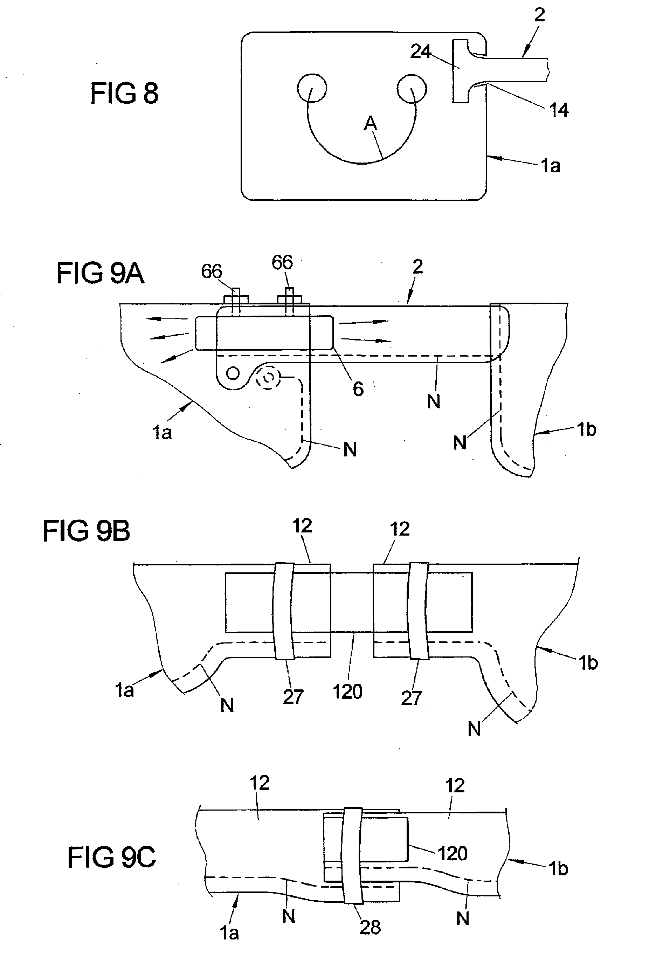

Figur 8 zeigt schließlich eine weitere Möglichkeit zur formschlüssigen Anordnung eines Verbindungskanals 2 an einem aufblasbaren Bereich 1a einer Airbageinrichtung, wobei hier der Verbindungskanal 2 mit einem verbreiterten Endabschnitt 24 den Rand einer Durchgangsöffnung 14 des aufblasbaren Bereiches 1a hintergreift, die von jenem Verbindungskanal 2 durchgriffen wird.

In den Figuren 9a bis 9c sind weitere Varianten zur Verbindung von Komponenten einer Airbageinrichtung dargestellt.

Gemäß Figur 9a stehen von einem Gasgenerator 6 Befestigungsbolzen 66 ab, die jeweils eine Befestigungsöffnung in einem ersten aufblasbaren Bereich 1a der Airbageinrichtung sowie in einem Verbindungskanal 2 der Airbageinrichtung durchgreifen, welcher mit einem zweiten aufblasbaren Bereich 1b zu einem Modul zusammengefasst ist. Unter Verwendung von auf die Befestigungsbolzen geschraubten Muttern erfolgt eine Verbindung zwischen dem ersten aufblasbaren Bereich 1 a und dem Verbindungskanal 2 und somit dem gesamten den Verbindungskanal 2 umfassenden Modul im Bereich des Gasgenerators 6.

Gemäß den Figuren 9b und 9c weisen zwei voneinander beabstandet angeordnete aufblasbare Bereiche 1 a, 1 b einer Airbageinrichtung jeweils einen Verbindungsabschnitt 12 auf, der jeweils auf den anderen der beiden aufblasbaren Bereiche 1 a, 1 b gerichtet ist. Diese beiden Verbindungsabschnitte 12 bilden gemeinsam einen Verbindungsbereich, über den die beiden aufblasbaren Bereiche 1a, 1b unter zusätzlicher Verwendung eines Verbindungsrohres 120 miteinander in Verbindung, genauer in Strömungsverbindung, stehen. Das Verbindungsrohr 120 ist dabei in jenem Verbindungsbereich der Airbageinrichtung angeordnet.

Beide Verbindungsabschnitte 12 sind mit dem Verbindungsrohr 120 mittels eines ringförmigen Befestigungselementes 27 bzw. 28 verbunden, welches das Verbindungsrohr 120 unter Zwischenlage mindestens eines der Verbindungsabschnitte 12 ringförmig umgreift und hierdurch den jeweiligen Verbindungsabschnitt 12 am Verbindungsrohr 120 festlegt.

Bei dem in Figur 9b gezeigten Ausführungsbeispiel ist dabei jedem der Verbindungsabschnitte 12 ein eigener Befestigungsring 27 zugeordnet, während bei dem in Figur 9c gezeigten Ausführungsbeispiel ein einzelner Befestigungsring 28 beide Verbindungsabschnitte 12 am Verbindungsrohr 120 festlegt.

In den Figuren 10a bis 10c ist ein erstes Ausführungsbeispiel von Befestigungslaschen 4 dargestellt, die zur Befestigung einer Airbageinrichtung der anhand der Figuren 1 bis 7b dargestellten Art an der Struktur eines Kraftfahrzeugs bzw. an zugeordneten Anbindungspunkten der Struktur dienen können.

Gemäß den Figuren 10a bis 10c sind die Befestigungslaschen 4 jeweils zweilagig ausgeführt, wobei die beiden (spiegelsymmetrisch zueinander ausgeführten) Materiallagen 40 einer jeweiligen Befestigungslasche 4 (zum Beispiel in Form von Gewebelagen) nach dem Schmetterlings-Prinzip entlang einer Symmetrieachse bzw. Faltlinie 41 einstückig miteinander verbunden sind, so dass die zweilagigen Befestigungslaschen 4 jeweils einteilig ausgeführt sind.

Eine jeweilige Befestigungslasche 4 wird in der Weise an einer zugeordneten Komponente der Airbageinrichtung, zum Beispiel an einem der aufblasbaren Bereiche 1a, 1b oder an einem Verbindungskanal 2 fixiert, dass jede der beiden Lagen 40 einer Befestigungslasche 4 mit jeweils einer Lage 10a, 10b oder 20 der entsprechenden Komponente 1 a, 1 b, 2 verbunden wird, vergleiche Figuren 4a und 5a.

Die Fixierung einer jeweiligen Lage 40 der Befestigungslasche 4 an einer Lage der zugeordneten Komponente 1 a, 1 b oder 2 der Airbageinrichtung erfolgt dabei über eine Naht 46, die im Ausführungsbeispiel der Figuren 10a bis 10c schräg (zum Beispiel unter einem Winkel von 45°) zu der Symmetrieachse bzw. Faltlinie 11, 21 der jeweils zugeordneten Komponente 1a, 1b, 2 der Airbageinrichtung verläuft. Nach Herstellung jener Verbindungsnaht 46 zur Verbindung einer jeweiligen Materiallage 40 der Befestigungslasche 4 mit einer zugeordneten Materiallage 10a, 10b, 20 einer Komponente 1 a, 1 b, 2 der Airbageinrichtung wird jede der beiden Materiallagen 40 der Befestigungslasche 4 mit einem freien Endabschnitt (Befestigungsabschnitt 4a) um jene schräg verlaufende Verbindungsnaht 46 geklappt, so dass die Lagen 40 mit einem freien Ende jeweils oberhalb der Symmetrieachse bzw. Faltlinie 11, 21 der zugeordneten Komponente 1 a, 1 b oder 2 der Airbageinrichtung positioniert sind.

Die als Befestigungsabschnitte dienenden freien Endabschnitte 4a einer Befestigungslasche 4 sind jeweils mit einer Befestigungsöffnung 45 versehen, wobei die Befestigungsöffnungen 45 der beiden Lagen 40 im um die Naht 46 geklappten Zustand einander überdecken bzw. miteinander fluchten, so dass sie eine durchgehende Befestigungsöffnung zur Befestigung an einer Kraftfahrzeugstruktur, zum Beispiel mittels Schrauben oder Nieten, bilden.

Dabei ragen die Befestigungslaschen 4 mit ihren der Befestigung dienenden Befestigungsabschnitten 4a in Form freier Endabschnitte jeweils über den äußeren Rand bzw. die äußere Kante des zugeordneten aufblasbaren Bereiches der Airbageinrichtung (hier gebildet durch eine Faltlinie 11, 21) hinaus, vergleiche Figur 10c sowie Figur 14. Die jeweilige der Befestigung an einer Kraftfahrzeugstruktur dienende Befestigungsstelle (Befestigungsöffnung 45) an der Befestigungslasche 4, welche am umgeklappten Befestigungsabschnitt 4a vorgesehen ist, ist dementsprechend vom besagten seitlichen Rand in Form einer Faltlinie 11, 21 beabstandet.

Figur 14 zeigt die Anwendung von Befestigungslaschen 4 der in den Figuren 10a bis 10c dargestellten Art auf eine Airbageinrichtung, die zwei voneinander beabstandete aufblasbare Bereiche 1a, 1b aufweist und einen die beiden aufblasbaren Bereiche 1a, 1b verbindenden Verbindungskanal 2. Befestigungslaschen 4 der vorstehend beschriebenen Art sind dabei sowohl an den beiden aufblasbaren Bereichen 1a, 1b als auch am Verbindungskanal 2 vorgesehen, und zwar jeweils im Bereich einer oberen Kante der jeweiligen Komponente 1 a, 1 b, 2, die hier wiederum beispielhaft durch eine Symmetrieachse bzw. Faltlinie 11, 21 gebildet wird.

In den Figuren 10d und 10e ist jeweils eine Abwandlung der in den Figuren 10a bis 10c gezeigten Befestigungslasche 4 dargestellt, und zwar jeweils in dem der Figur 10a zugrunde liegenden (aufgeklappten) Zustand der Befestigungslasche.

Gemäß den Figuren 10d und 10e ist die jeweilige Verbindungsnaht 46', die zur Verbindung einer jeweiligen Materiallage 40 der Befestigungslasche 4 mit einer zugeordneten Materiallage 10a, 10b, 20 einer Komponente 1a, 1b, 2 der Airbageinrichtung dient, als eine gekrümmte Naht ausgebildet, wobei die Naht 46' im Fall der Figur 10d im Wesentlichen U-förmig und im Fall der Figur 10e im Wesentlichen V-förmig ausgestaltet ist und wobei außerdem die jeweilige Naht 46' in einer den Befestigungsöffnungen 45 gegenüberliegenden Stirnseite der Befestigungslasche 4 ausläuft.

In den Figuren 11a bis 11c ist eine weitere Abwandlung der Anordnung aus den Figuren 10a bis 10c dargestellt, wobei der Unterschied darin besteht, dass gemäß den Figuren 11a bis 11c die Naht 47, über die die Befestigungslasche 4 an einer zugeordneten Komponente 1 a, 1 b oder 2 einer Airbageinrichtung befestigt wird, als gekrümmte Naht, hier konkret als eine bogenförmig entlang einer Kreisbahn verlaufende Naht, ausgebildet ist. Hierdurch lassen sich unterschiedliche Klappwinkel der freien Endabschnitte der beiden Materiallagen 40 der Befestigungslasche 4 realisieren, je nachdem, um welchen Bereich der Befestigungsnaht 47 die freien Endabschnitte geklappt werden.

Wie bereits anhand der Figuren 10a bis 10e deutlich wurde, ist eine (ringförmig) geschlossene Ausgestaltung der jeweiligen Verbindungsnaht 46 bzw. 47 einer Befestigungslasche 4 nicht zwingend erforderlich, da die Nähte im Belastungsfall in der Regel ohnehin nur in bestimmten Teilbereichen belastet werden.

In den Figuren 11d bis 11g ist eine Abwandlung der Befestigungslasche 4 aus den Figuren 11a bis 11c dargestellt, wobei der wesentlich Unterschied darin besteht, dass die in den Figuren 11d bis 11g dargestellte Befestigungslasche 4 insgesamt vierlagig ausgebildet ist, wobei die Befestigungslasche 4 auch in diesem Fall einteilig ausgeführt ist, also die insgesamt vierlagige Befestigungslasche durch mehrfaches (zweifaches) Falten eines Materialzuschnittes in Form eines einstückigen Materialteiles (Gewebeteiles) gebildet wird.

Konkret wird ausgegangen von einem - symmetrisch bezüglich einer ersten Faltachse bzw. Faltlinie 41' ausgebildeten - Materialteil, vergleiche Figur 11d, aus welchem durch Falten (Umschlagen) um jene Symmetrieachse bzw. Faltlinie 41' das in Figur 11e gebildete, einfach gefaltete und daher nun zweilagige Materialteil gebildet wird, welches in der Draufsicht mit dem in Figur 11a dargestellten übereinstimmt, jedoch im Gegensatz zu diesem zweilagig (und nicht einlagig) ausgeführt ist. Anschließend werden an dem zweilagigen Materialteil der Figur 11e dieselben Faltprozesse vorgenommen wie zuvor anhand der Figuren 11a bis 11c für ein einlagiges Ausgangsteil beschrieben, wobei die zweite Symmetrie- bzw. Faltachse 41, um die gemäß Figur 11e der nächste Faltvorgang verläuft, senkrecht zu der ersten Symmetrieachse bzw. Faltlinie 41' orientiert ist.

Die gemäß den Figuren 11d und 11e nacheinander erfolgenden Faltvorgänge sind in den Figuren 11d und 11e jeweils durch einen Pfeil P1 bzw. P2 angedeutet.

In ihrem fertig gefalteten Zustand, in dem sie zudem über eine Befestigungsnaht 47 an einer zugeordneten Komponente 1a, 1b, 2 einer Airbageinrichtung befestigt ist, ist die Befestigungslasche 4 gemäß Figur 11g vierlagig ausgebildet, wobei eine jeweilige Doppellage 40 zur Anbindung an jeweils eine Lage 10a, 10b, 20 einer zugeordneten Komponente 1 a, 1 b oder 2 der Airbageinrichtung dient.

Durch eine solche Ausgestaltung der Befestigungslaschen 4 mit mehr als zwei Lagen, werden diese zusätzlich verstärkt, um auch erhöhten Beanspruchungen standhalten zu können. Insbesondere wird das Risiko eines Auskämmens von Filamenten an den Rändern der Befestigungslasche 4 weiter reduziert.

Sofern es sich bei der Komponente 1a, 1b, 2 der Airbageinrichtung, der eine jeweilige Befestigungslasche 4 zugeordnet ist, nicht um eine nach dem Schmetterlingsprinzip ausgeführte Komponente mit Symmetrieachse bzw. Faltlinie handeln sollte, wird die jeweilige Befestigungslasche 4 vorteilhaft allgemein im Bereich der oberen Randes/der oberen Kante der entsprechenden Komponente 1a, 1b, 2 angebracht, welcher der Dachkante eines Kraftfahrzeugs zugeordnet ist; und die entsprechenden Nähte 46, 47 verlaufen dann schräg bzw. gekrümmt bezüglich der oberen Kante der jeweiligen Komponente 1a, 1b, 2 (die im vorliegenden Ausführungsbeispiel der Figuren 10a bis 10c bzw. 11a bis 11c speziell durch eine Symmetrieachse bzw. Faltlinie 11, 21 gebildet wird). Allgemein kann es sich aber um eine beliebige obere Kante einer als Kopfschutzvorrichtung dienenden Airbageinrichtung handeln, die dem Dachkantenbereich eines Kraftfahrzeugs zugeordnet ist.

Selbstverständlich können die Befestigungslaschen 4 auch an anderen Bereichen einer Airbageinrichtung vorgesehen sein, also etwa an seitlichen Kanten oder auch an einer unteren Kante, die dem Fahrzeugboden zugewandt ist und beispielsweise im eingebauten Zustand der Airbageinrichtung im Bereich der Türbrüstung einer Kraftfahrzeugtür liegt.

In den Figuren 11c(1) bis 11c(5) ist die Befestigungslasche 4 aus Figur 11c in unterschiedlichen Belastungssituationen dargestellt, die zu einer relativen Verschiebung des Befestigungsabschnittes 4a und damit der Befestigungsöffnung 45, über die die Befestigungslasche 4 an einem tragenden Kraftfahrzeugteil festzulegen ist, bezüglich der Verbindungsstellen, z.B. einer Naht 47, über die die Lasche 4 an einer zugeordneten Komponente einer Airbageinrichtung festzulegen ist, führen.

Die Figur 11c(3) zeigt dabei die Normalposition der Befestigungslasche 45 ohne Einwirkung signifikanter äußerer Kräfte z. B. in Folge eines Unfalls und eines hiermit verbundenen Aufblasens des aufblasbaren Bereiche der Airbageinrichtung. Dies entspricht der Figur 11 c, wobei hier zusätzlich mit T derjenige Teilabschnitt der Verbindungsnaht 47 bezeichnet ist, der in dieser Lage (potentiell) besonders belastet ist, weil hierüber eine Krafteinleitung zwischen Befestigungslasche 4 und einer zugeordneten Komponente einer Airbageinrichtung erfolgen kann.

Anhand der Figuren 11c(1) und 11c(2), wird deutlich, dass bei einer Belastung, welche die Tendenz hat, die Befestigungsöffnung 45 von der Verbindungsnaht 47 weg zu bewegen und dabei den Befestigungsabschnitt 4a schräg zu stellen, der belastete Teilabschnitt T der Verbindungsnaht 47 tendenziell in seiner Ausdehnung entlang der Verbindungsstellen bzw. Naht 47 wächst und daher die eingeleitete Kraft über einen größeren Bereich verteilt wird (da sich der belastete Nahtabschnitt der Verbindungsnaht 47 von der Symmetrieachse bzw. Faltlinie 41 der Befestigungslasche 4 wegbewegt und gleichzeitig die Neigung des belasteten Nahtabschnittes T bezüglich jener Faltlinie 41 abnimmt).

Bei einer Belastung in umgekehrter Richtung, wie anhand der Figuren 11 c(4) und 11 c(5) dargestellt, bei der sich die Befestigungsöffnung 45 der Befestigungslasche 4 durch entsprechende Schrägstellung des Befestigungsabschnittes tendenziell der Verbindungsnaht 47 annähert, bewegt sich demgegenüber der belastete Teilabschnitt T der Befestigungsnaht 47 zu der Symmetrieachse bzw. Faltlinie 41 hin und ist stärker gegenüber letzterer geneigt. In diesem Fall konzentriert sich die eingeleitete Kraft an der Verbindungsnaht 47 zwischen der Befestigungslasche 4 und einer zugeordneten Komponente der Airbageinrichtung auf einen relativ kleinen Bereich; es findet also eine stärkere Kraftkonzentration statt.

Insofern ist eine Anordnung der Befestigungslaschen 4 an einer Airbageinrichtung einerseits und am Kraftfahrzeug andererseits vorteilhaft, die bei typischen (häufigen) Unfallsituationen zu einer Krafteinleitung gemäß den Figuren 11 c(1) und 11 c(2) führt.

Die anhand der Figuren 11c(1) bis 11c(5) beschriebene Bewegung des Befestigungsabschnittes 4a an der Befestigungslasche 4 erfolgt dabei im Wesentlichen in einer Ebene, die der Hauptausbreitungsebene des jeweils zugeordneten aufblasbaren Bereiches 1a, 1b einer Airbageinrichtung entspricht, wie in Figur 14 dargestellt.

Nachfolgend werden anhand der Figuren 12a bis 12d und 13a bis 13d Varianten von Befestigungslaschen zur Befestigung der Airbageinrichtung bzw. eines aufblasbaren Bereiches der Airbageinrichtung an der Kraftfahrzeugstruktur dargestellt, die im Unterschied zu den Ausführungsbeispielen der Figuren 10a bis 10e und 11a bis 11g keinen umgeklappten Befestigungsabschnitt 4a in Form eines freien Endabschnittes der jeweiligen Befestigungslasche aufweisen. Befestigungslaschen der in den Figuren 12a bis 13d gezeigten Art können jedoch gegebenenfalls in Kombination mit den zuvor erläuterten Befestigungslaschen eingesetzt werden; etwa in der Weise, dass zur Befestigung einer Airbageinrichtung an einer Kraftfahrzeugstruktur zum einen Befestigungslaschen mit umgeklapptem Befestigungsabschnitt 4a der in den Figuren 10a bis 10e sowie 11a bis 11g gezeigten Art und zusätzlich auch Befestigungslaschen der nachfolgend anhand der Figuren 12a bis 13d zu beschreibenden Art verwendet werden.

In den Figuren 12a bis 12d ist eine Variante einer Befestigungslasche 4 dargestellt, die mittels parallel zur oberen Kante 11 (zum Beispiel in Form einer Symmetrieachse bzw. Faltlinie) eines aufblasbaren Bereiches 1 oder einer sonstigen Komponente einer Airbageinrichtung verlaufender Nähte 48 an dieser fixiert ist, und zwar in der Weise, das je eine Lage 40 der einstückigen, zweilagigen Befestigungslasche 4 an jeweils einer Materiallage der zugeordneten Komponente 1 der Airbageinrichtung fixiert wird. Dabei bildet die Befestigungslasche 4 im fixierten Zustand eine Schlaufe mit einer Befestigungsöffnung 45, über die eine Befestigung an einer Fahrzeugstruktur erfolgen kann, zum Beispiel mittels Befestigungsbolzen, Schrauben oder Nieten.

Im Unterschied zu den anhand der Figuren 10a bis 10c sowie 11a bis 11c dargestellten Befestigungslaschen erfolgt hier kein Umklappen freier Endabschnitte der Befestigungslasche 4, um diese in ihre Funktionsposition zu bringen; sondern die Befestigungslasche 4 aus den Figuren 12a bis 12d weist unmittelbar nach ihrer Fixierung an einer zugeordneten Komponente 1 einer Airbageinrichtung in jeder ihrer beiden Lagen 40 jeweils einen über die obere Kante 11 jener Komponente 1 hinausragenden Befestigungsabschnitt mit Befestigungsöffnung 45 auf, welcher u.a. durch die Faltlinie 41 der Befestigungslasche 4 begrenzt ist.

In den Figuren 13a bis 13d ist eine Abwandlung der Anordnung aus den Figuren 12a bis 12d gezeigt, wobei der wesentliche Unterschied darin besteht, dass zur Befestigung der Befestigungslasche 4 in Form einer Befestigungsschlaufe gekrümmte Nähte, hier in Form bogenförmiger, entlang einer Kreisbahn verlaufender Nähte, verwendet werden.

In den Figuren 15a und 15b ist schließlich noch eine einseitig fixierte, insbesondere angenähte, Befestigungslasche 4 dargestellt, die im Bereich der oberen Kante 11 einer (zweilagigen) Komponente 1 einer Airbageinrichtung an jener Komponente 1 befestigt wird, und zwar unter Verwendung einer Naht 47', die gleichzeitig zwei Lagen 10 jener Komponente 1 der Airbageinrichtung miteinander verbindet und hierdurch eine Einschnürung in jener Komponente 1 definiert. Die Befestigungslasche 4 kann hier nach dem Umschlagen und gegebenenfalls Falten der einen aufblasbaren Gassackbereich bildenden Komponente 1 gefügt werden.

Figur 16 zeigt einen Querschnitt durch einen Verbindungsbereich 2, z.B. in Form eines Verbindungskanales) einer Airbageinrichtung der vorstehend beschriebenen Art, in dem ein Gasgenerator 6 angeordnet ist. Der Gasgenerator 6 ist in einer (hier formstabilen aber ebenso auch flexibel ausbildbaren) rohrförmigen Aufnahme 7, z. B. bestehend aus Metall, angeordnet, wie sie auch in den Figuren 21 a bis 21 c gezeigt ist. Die rohrförmige Aufnahme 7 umgibt den hier als Rohrgasgenerator ausgebildeten Gasgenerator 6 ringförmig, so dass aus dem Gasgenerator 6 austretendes Gas zunächst in das Innere der rohrförmigen Aufnahme 7 gelangt und anschließend in axialer Richtung aus stirnseitigen Austrittsöffnungen der rohrförmigen Aufnahme austritt, wobei beispielsweise jede von zwei stirnseitigen Austrittsöffnungen 71, 72, wie in Figur 21c dargestellt, einem aufblasbaren Bereich der Airbageinrichtung zugeordnet sein kann.

Der Gasgenerator 6 weist einen elektrischen Anschluss 61 für ein Zündkabel 62 auf, über das der Gasgenerator 6 in einem Crash-Fall sensorgesteuert gezündet werden kann. Das Zündkabel 62 erstreckt sich von einem elektrischen Anschluss 61 an einem axialen Ende des Gasgenerators 6 ausgehend in radialer Richtung an dem Gasgenerator 6 und der rohrförmigen Aufnahme 7 vorbei in einen Bereich des von dem Verbindungsbereich 2 umschlossenen Raumes außerhalb der rohrförmigen Aufnahme 7 und ist dort in axialer Richtung weitergeführt. Mittels einer den Verbindungskanal 2 umgebenden Bandage 200 kann das Zündkabel 62 dann dichtend aus dem von dem Verbindungsbereich 2 umschlossenen Raum herausgeführt werden, um eine elektrische Verbindung mit einer Steuerelektronik zur Steuerung des Gasgenerators 6 herzustellen.

Die zwischen dem Verbindungsbereich 2 und dem Gasgenerator 6 angeordnete rohrförmige Aufnahme 7, der Verbindungsbereich 2 selbst sowie die den Verbindungsbereich 2 umgebende Bandage 200 sind dabei mit dem Gasgenerator 6 über von dem Gasgenerator 6 abstehende Befestigungsbolzen 66 und zugehörige Muttern verbunden, so dass die besagten Komponenten 6, 7, 2, 200 eine bauliche Einheit bilden.

In den Figuren 21a bis 21c ist noch einmal im größeren Detail eine aus einem Gasgenerator 6 und einer formstabilen, rohr- bzw. tonnenförmigen Aufnahme 7 gebildete Baugruppe gezeigt, und zwar in Figur 21 a in Form zweier Einzelteile und in den Figuren 21b und 21c im montierten Zustand, in dem die hier im Querschnitt oval ausgebildete rohrförmige Aufnahme 7 mittels von dem Gasgenerator 6 abstehender Befestigungsbolzen 66 und zugehöriger Muttern am Gasgenerator 6 festgelegt ist.

Wie insbesondere anhand Figur 21c deutlich wird, erstreckt sich die rohrförmige Aufnahme 7 in axialer Richtung des Gasgenerators 6 etwa über dieselbe Länge wie der Gasgenerator 6 selbst; und sie dient zur Weiterleitung von Gasen G, welche im Betrieb des Gasgenerators 6 aus Abströmöffnungen 60 in dessen Mantelfläche ausströmen und dann mittels der rohrförmigen Aufnahme 7 in axialer Richtung umgelenkt und dabei in zwei Teilgasströme aufgeteilt werden. Die beiden Teilgasströme treten sodann entgegengesetzt zueinander in axialer Richtung aus zwei einander gegenüberliegenden stirnseitigen Austrittsöffnungen 71, 72 der tonnenförmigen Aufnahme 7 aus, von wo aus sie in jeweils einen aufzublasenden Bereich einer Airbageinrichtung gelangen können.

In den Figuren 17a und 17b sind zwei weitere Ausführungsbeispiele rohr- bzw. tonnenförmiger Gasstromverteiler 7 dargestellt, die jeweils mittels mindestens eines Befestigungsbolzens 66 am Gasgenerator 6 festgelegt sind und die einen aus dem Gasgenerator 6 austretenden Gasstrom G in zwei Teilgasströme G1, G2 aufteilen, die in entgegengesetzter Richtung durch jeweils eine Austrittsöffnung 71, 71' bzw. 72 hindurch aus dem Gasstromverteiler 7 austreten. In den Fällen der Figuren 17a und 17b erstreckt sich dabei der jeweilige rohrförmige Gasstromverteiler 7 in axialer Richtung nicht über die gesamte Länge des Gasgenerators 6.

Die Ausführungsbeispiele aus den Figuren 17a und 17b unterscheiden sich zum einen dadurch voneinander, dass im Fall der Figur 17a die Abströmöffnungen 60 des Gasgenerators 6 in dessen Mantelfläche vorgesehen sind, während sie im Fall der Figur 17b stirnseitig am Gasgenerator 6 angeordnet sind. Ein weiterer Unterschied besteht darin, dass im Fall der Figur 17b die beiden stirnseitigen Gasaustrittsöffnungen 71', 72 des Gasstromverteilers 7 einen unterschiedlichen Austrittsquerschnitt aufweisen, so dass hier zwei aufblasbare Bereiche einer Airbageinrichtung mit einer unterschiedlichen Gasmenge befüllt werden können.

Weitere Einzelheiten solcher Gasstromverteiler sind beispielsweise in der WO 2007/062847 A1 beschrieben.

In den Figuren 18a und 18b ist ein Anordnung dargestellt, gemäß der ein in einem Verbindungskanal 2 einer Airbageinrichtung angeordneter Gasgenerator 6 von einem Schutzlagenwickel 8 als Flammschutz bzw. Schutz vor hohen Drücken umgeben ist, welcher im Querschnitt spiralförmig um den Gasgenerator 6 gewickelt ist. Der Schutzlagenwickel 8 ist zusammen mit dem Verbindungskanal 2 mittels Befestigungsbolzen 66 am Gasgenerator 6 festgelegt.

Die Figuren 19a und 19b zeigen die Anordnung aus den Figuren 18a und 18b in einem Zustand, in dem aus dem Gasgenerator 6 ein Gasstrom G zum Aufblasen der Airbageinrichtung austritt, wobei der Schutzlagenwickel 8 abgewickelt und nach außen gegen die innere Oberfläche des Verbindungskanals 2 gedrückt wird.

Hierbei ist zu beachten, dass in den Figuren 18a und 19a der Schutzlagenwickel 8 jeweils zusammen mit dem Gasgenerator 6 und dem Verbindungskanal 2 dargestellt ist, während in den perspektivischen Darstellungen der Figuren 18b und 19b der besseren Übersichtlichkeit halber der Schutzlagenwickel 8 jeweils alleine bzw. zusammen mit einem Befestigungsbolzen 66 gezeigt ist.

In den Figuren 20a und 20b ist eine Ausführungsform eines Schutzlagenwickels 8 dargestellt, welcher im gewickelten Zustand in axialer Richtung abstehende Fixierungsabschnitte 85 aufweist, an denen der Schutzlagenwickel im gewickelten Zustand mittels Reißnähten 86 provisorisch fixierbar ist. Die Verbindungen entlang der Reißnähte 86 reißen auf, wenn auf den Schutzlagenwickel 8 aus den Figuren 20a und 20b mittels aus einem Gasgenerator ausströmender Gase ein erhöhter Gasdruck wirkt. Dies ermöglicht ein Abwickeln und radiales Ausdehnen des Schutzlagenwickels 8 wie anhand der Figuren 19a und 19b erläutert.

In Figur 22 ist schließlich ein Flammschutz dargestellt, der durch einen innerhalb eines Verbindungsbereiches 2 (in Form eines Verbindungskanals) angeordneten Gewebeschlauch 9 erreicht wird, welcher auf seiner Innenseite mit einer hitzebeständigen Materiallage 9a versehen bzw. beschichtet ist. Diese ist einem innerhalb des Verbindungsbereiches 2 anzuordnenden Gasgenerator zugewandt.

Die anhand der vorstehenden Figuren beschriebenen Airbageinrichtungen können als ungedichtete Kopfairbag-Variante oder auch als gedichtetes System ausgelegt werden, insbesondere durch Abdichtung im Bereich des Gasgenerators, wie anhand Figur 16 dargestellt.

Für eine besonders fertigungsgerechte Ausgestaltung können die Komponenten eines jeweiligen Bausatzes zum Fügen synchronisiert und mit so genannten Poka-Yoke-Merkmalen fertigungssicher ausgelegt werden.

Die vorstehend beschriebenen Aufbauten lassen sich grundsätzlich mit allen Generatortypen, wie z. B. Pyro-, Hybrid- und Kaltgasgeneratoren realisieren.

Zusammenfassend zeichnen sich die vorstehend beschriebenen Ausführungsbeispiele einer Airbageinrichtung hinsichtlich deren Befestigung an einer Kraftfahrzeugstruktur unter Verwendung von Befestigungslaschen dadurch aus, dass die Befestigungslaschen aus von den aufblasbaren Bereichen 1 a, 1 b der Airbageinrichtung separaten Materialteilen (Materialzuschnitten) bestehen, welche über eine (insbesondere gekrümmte) Verbindungslinie mit der Airbageinrichtung, insbesondere einem zugeordneten aufblasbaren Bereich 1 a, 1 b der Airbageinrichtung verbunden sind. Dabei weist eine jeweilige Befestigungslasche einen Befestigungsabschnitt auf, über den eine Anbindung (Festlegung) der jeweiligen Befestigungslasche an einer Fahrzeugstruktur erfolgt und der durch Umklappen bzw. Umschlagen eines freien Endabschnittes der jeweiligen Befestigungslasche um die zugeordnete Verbindungslinie (zwischen Befestigungslasche und aufblasbarem Bereich der Airbageinrichtung) gebildet ist, so dass er vorteilhaft über einen seitlichen Rand der Airbageinrichtung hinausragt.

Der jeweilige Befestigungsabschnitt einer Befestigungslasche ist dabei - unter bleibender Fixierung mit einem Ende an der Verbindungslinie zur Airbageinrichtung und mit dem anderen Ende an der Kraftfahrzeugstruktur - unter der Einwirkung äußerer Kräfte, z. B. als Folge eines Aufblasens der Airbageinrichtung, in unterschiedliche Winkelpositionen ausrichtbar, und zwar insbesondere in der Hauptebene, entlang der sich die Airbageinrichtung erstreckt.

Hierdurch eröffnet sich eine relative Beweglichkeit der Airbageinrichtung bezüglich der zugeordneten Anbindungspunkte an einer Fahrzeugstruktur, an denen die Airbageinrichtung über die Befestigungslaschen festgelegt ist, wobei die zwischen einer jeweiligen Befestigungslasche und der Airbageinrichtung wirkenden Kräfte an der jeweiligen Verbindungslinie zwischen Befestigungslasche und Airbageinrichtung verteilt werden.

## Patentansprüche

1. Airbageinrichtung zum Schutz eines Fahrzeuginsassen in einem Crash-Fall, mit
- mindestens einem mit Gas aufblasbaren Bereich (1 a, 1 b), der im aufgeblasenen Zustand ein Gaskissen für einen zu schützenden Fahrzeuginsassen in Form eines Seitenairbags bildet,
- mindestens einer ersten Materiallage (10a, 10b) des aufblasbaren Bereiches, die sich im aufgeblasenen Zustand der Airbageinrichtung vor einer seitlichen Fahrzeugstruktur eines Kraftfahrzeugs erstreckt , und
- mindestens einer zweiten Materiallage (10a, 10b) des aufblasbaren Bereiches, die im aufgeblasenen Zustand der Airbageinrichtung der ersten Materiallage gegenüberliegt,
wobei an der Airbageinrichtung mindestens eine Befestigungslasche (4) vorgesehen ist, über die die Airbageinrichtung an einer Kraftfahrzeugstruktur befestigbar ist,
**dadurch gekennzeichnet,**
**dass** es sich bei der Befestigungslasche (4) um ein von dem aufblasbaren Bereich (1a, 1b) separates Element handelt, welches mindestens zweilagig ausgebildet ist und mit mindestens je einer Lage (40) jeweils über eine Verbindungslinie (46, 46', 47, 47', 48) an einer Materiallage (10a, 10b) des aufblasbaren Bereiches (1a, 1b) fixiert ist, und dass die Lagen (40) der Befestigungslasche (4) jeweils einen um die Verbindungslinie (46, 46', 47, 47', 48) geklappten Befestigungsabschnitt (4a) aufweisen, der von der Airbageinrichtung absteht und zur Festlegung der Airbageinrichtung an einer Kraftfahrzeugsstruktur dient.

2. Airbageinrichtung nach Anspruch 1, **dadurch gekennzeichnet, dass** die Befestigungslasche (4) jeweils mindestens eine von einem Befestigungselement durchgreifbare Befestigungsöffnung (45) zur Befestigung an der Kraftfahrzeugstruktur aufweist.

3. Airbageinrichtung nach Anspruch 1 oder 2, **dadurch gekennzeichnet, dass** die Befestigungslasche (4) aus einem einstückigen Materialzuschnitt gebildet ist, der zur Bildung mindestens zweier Lagen (40) um mindestens eine Faltlinie (41) umgelegt ist.

4. Airbageinrichtung nach einem der vorhergehenden Ansprüche, **dadurch gekennzeichnet, dass** die Befestigungslasche (4) über Nähte (46, 46', 47, 47', 48) an der Airbageinrichtung fixiert ist.

5. Airbageinrichtung nach einem der vorhergehenden Ansprüche, **dadurch gekennzeichnet, dass** die Befestigungslasche (4) entlang mindestens einer Verbindungslinie (46, 46', 47, 47'), z. B. in Form einer Naht, an der Airbageinrichtung fixiert ist, die geneigt zu einer oberen Kante (11, 21) der Airbageinrichtung - bezogen auf den in ein Kraftfahrzeug eingebauten Zustand der Airbageinrichtung - verläuft.

6. Airbageinrichtung nach einem der vorhergehenden Ansprüche, **dadurch gekennzeichnet, dass** die Befestigungslasche (4) jeweils über mindestens eine Verbindungslinie (46', 47, 47'), z. B. in Form einer Naht, an der Airbageinrichtung fixiert ist, die entlang einer gekrümmten Bahn verläuft.

7. Airbageinrichtung nach Anspruch 6, **dadurch gekennzeichnet, dass** die Verbindungslinie (46', 47, 47') entlang zumindest eines Teiles einer Ringbahn, insbesondere einer Kreisbahn, verläuft.

8. Airbageinrichtung nach Anspruch 6, **dadurch gekennzeichnet, dass** die Verbindungslinie (46') im Wesentlich U- oder V-förmig verläuft.

9. Airbageinrichtung nach einem der vorhergehenden Ansprüche, **dadurch gekennzeichnet, dass** ein Befestigungsabschnitt einer jeweiligen Befestigungslasche (4) um eine Verbindungslinie (46, 47, 47'), über die die Befestigungslasche (4) an der Airbageinrichtung fixiert wird, geklappt ist, so dass der Befestigungsabschnitt über eine Kante (11, 21) der Airbageinrichtung hinausragt.

10. Airbageinrichtung nach einem der vorhergehenden Ansprüche, **dadurch gekennzeichnet, dass** mindestens eine Befestigungslasche (4) an einem bereits gefalteten aufblasbaren Bereich (1 a, 1 b) der Airbageinrichtung befestigt worden ist.

11. Airbageinrichtung nach einem der vorhergehenden Ansprüche, **dadurch gekennzeichnet, dass** der Befestigungsabschnitt (4a) einer jeweiligen Befestigungslasche (4) derart flexibel ausgeführt ist, dass er sich unter Krafteinwirkung in unterschiedliche Winkelpositionen bezüglich der Verbindungslinie (46, 46', 47, 47') bewegen kann.

12. Airbageinrichtung nach einem der vorhergehenden Ansprüche, **dadurch gekennzeichnet, dass** die beiden Materiallagen (10a, 10b) eines aufblasbaren Bereiches (1a, 1b) der Airbageinrichtung jeweils einen Bestandteil eines einstückigen Gassackteiles bilden, das entlang mindestens einer Faltlinie (11) umgeschlagen ist, so dass die beiden Materiallagen (10a, 10b) einander gegenüberliegen, und dass die beiden Materiallagen (10a, 10b) außerhalb der Faltlinie (11) so miteinander verbunden sind, dass sie einen zu einem Gaskissen aufblasbaren Bereich (1 a, 1 b) definieren.

13. Airbageinrichtung nach Anspruch 12, **dadurch gekennzeichnet, dass** die Faltlinie (11) - bezogen auf den in ein Kraftfahrzeug eingebauten Zustand der Airbageinrichtung - entlang einer seitlichen Dachkante (DK) des Kraftfahrzeugs verläuft.

14. Airbageinrichtung nach Anspruch 12 oder 13, **dadurch gekennzeichnet, dass** die Faltlinie (11) im flach ausgebreiteten Zustand des jeweiligen Gassackteiles eine Symmetrieachse des Gassackteiles bildet.

15. Airbageinrichtung nach einem der Ansprüche 12 bis 14, **dadurch gekennzeichnet, dass** am aufblasbaren Bereich (1a, 1b) in der Umgebung der Faltlinie (11) mindestens eine Befestigungslasche (4) fixiert ist.

## Claims

1. Airbag device for protecting a vehicle occupant in case of a crash, comprising
- at least one region (1a, 1b) inflatable with gas, that forms a gas cushion in the inflated state in the form of a side airbag for a vehicle occupant to be protected,
- at least one first material layer (10a, 10b) of the inflatable region extending in front of a lateral vehicle structure of a motor vehicle in the inflated state of the airbag device, and
- at least one second material layer (10a, 10b) of the inflatable region that opposes the first material layer in the inflated state of the airbag device,
wherein at least one fastening flap (4) is provided at the airbag device via which the airbag device can be fastened to a motor vehicle structure,
**characterized in that**,
the fastening flap (4) is a separate element with respect to the inflatable region (1a, 1 b), that is formed at least two-layered and fixed with at least each of the two layers (40) to a material layer (10a, 10b) of the inflatable region (1a, 1b) via a connection line (46, 46', 47, 47', 48), respectively, and **in that** the layers (40) of the fastening flap (4) each comprise a fastening portion (4a) flapped around the connection line (46, 46', 47, 47', 48), that protrudes from the airbag device and serves for fastening the airbag device to a motor vehicle structure.

2. Airbag device according to claim 1, **characterized in that** the fastening flap (4) respectively comprises at least one fastening opening (45) that can be engaged by a fastening means for fastening to a motor vehicle structure.

3. Airbag device according to claim 1 or 2, **characterized in that** the fastening flap (4) is formed out of an integral material layout, which is reversed around at least one folding line (41) for forming at least two layers (40).

4. Airbag device according to one of the preceding claims, **characterized in that** the fastening flap (4) is fixed to the airbag device via seams (46, 46', 47, 47', 48).

5. Airbag device according to one of the preceding claims, **characterized in that** the fastening flap (4) is fixed to the airbag device along at least one connection line (46, 46', 47, 47'), e. g. in the form of a seam, which runs - with respect to the state of the airbag device in which the airbag device is built into a motor vehicle - inclined with respect to an upper edge (11, 21) of the airbag device.

6. Airbag device according to one of the preceding claims, **characterized in that** the fastening flap (4) is fixed to the airbag device via at least one connection line (46', 47, 47'), respectively, e. g. in the form a seam, which runs along a curved path.

7. Airbag device according to claim 6, **characterized in that** the connection line (46', 47, 47') extends along at least a part of a ring path, particularly a circular path.

8. Airbag device according to claim 6, **characterized in that** the connection line (46') essentially extends U- or V-shaped.

9. Airbag device according to one of the preceding claims, **characterized in that** a fastening portion of a respective fastening flap (4) is flapped around a connection line (46, 47, 47') via which the fastening flap (4) is fixed to the airbag device, so that the fastening portion protrudes beyond an edge (11, 21) of the airbag device.

10. Airbag device according to one of the preceding claims, **characterized in that** at least one fastening flap (4) was fastened to an already folded inflatable region (1a, 1 b) of the airbag device.

11. Airbag device according to one of the preceding claims, **characterized in that** the fastening portion (4a) of a respective fastening flap (4) is designed flexible in a way, that it can move under impact of a force into different angle position with respect to the connection line (46, 46', 47, 47').

12. Airbag device according to one of the preceding claims, **characterized in that** the two material layers (10a, 10b) of an inflatable region (1a, 1b) of the airbag device respectively form a component of an airbag part formed in one piece, that is reverted along at least one folding line (11), so that the two material layers (10a, 10b) face each other, and **in that** the two material layers (10a, 10b) are connected to each other outside the folding line (11) in a way, that they define a region that can be inflated to form a gas cushion.

13. Airbag device according to claim 12, **characterized in that** the folding line (11) - with respect to a state in which the airbag device is built into a motor vehicle - extends along a lateral roof edge (DK) of the motor vehicle.

14. Airbag device according to claim 12 or 13, **characterized in that** the folding line (11) forms a symmetry axis of the airbag part in an evenly outspread state of the respective airbag part.

15. Airbag device according to one of the claims 12 to 14, **characterized in that** at least one fastening flap (4) is fixed to the inflatable region (1a, 1b) in the vicinity of the folding line (11).

## Revendications

1. Système d'airbag pour protéger un occupant d'un véhicule en cas de collision, présentant :
- au moins une zone (1a, 1b) gonflable avec du gaz, qui forme à l'état gonflé un coussin de gaz pour un occupant de véhicule à protéger sous la forme d'un airbag latéral,
- au moins une première couche de matériau (10a, 10b) de la zone gonflable qui s'étend, à l'état gonflé du système d'airbag, devant une structure de véhicule latérale d'un véhicule automobile, et
- au moins une seconde couche de matériau (10a, 10b) de la zone gonflable, qui fait face, à l'état gonflé du système d'airbag, à la première couche de matériau,
système dans lequel au moins une languette de fixation (4) est prévue sur le système d'airbag, par laquelle le système d'airbag peut être fixé sur une structure de véhicule automobile,
**caractérisé en ce qu'**il s'agit pour la languette de fixation (4) d'un élément séparé de la zone (1a, 1b) gonflable, qui présente au moins deux couches et dont au moins une couche (40) est fixée chaque fois respectivement par une ligne de liaison (46, 46', 47, 47', 48) sur une couche de matériau (10a, 10b) de la zone gonflable (1a, 1b), et **en ce que** les couches (40) de la languette de fixation (4) présentent respectivement une section de fixation (4a) rabattue autour de la ligne de liaison (46, 46', 47, 47', 48) qui s'éloigne du système d'airbag et sert à la fixation du système d'airbag sur une structure de véhicule automobile.

2. Système d'airbag selon la revendication 1, **caractérisé en ce que** la languette de fixation (4) présente respectivement au moins une ouverture de fixation (45) pouvant être traversée par un élément de fixation pour la fixation sur la structure du véhicule automobile.

3. Système d'airbag selon la revendication 1 ou 2, **caractérisé en ce que** la languette de fixation (4) est constituée d'une découpe de matériau en un seul morceau qui est repliée autour d'au moins une ligne de pliage (41) pour la formation d'au moins deux couches (40).

4. Système d'airbag selon l'une quelconque des revendications précédentes, **caractérisé en ce que** la languette de fixation (4) est fixée par des coutures (46, 46', 47, 47', 48) sur le système d'airbag.

5. Système d'airbag selon l'une quelconque des revendications précédentes, **caractérisé en ce que** la languette de fixation (4) est fixée le long d'au moins une ligne de liaison (46, 46', 47, 47') par exemple sous la forme d'une couture sur le système d'airbag qui s'étend de manière inclinée vers une arête supérieure (11, 21) du système d'airbag par rapport à l'état intégré dans un véhicule automobile du système d'airbag.

6. Système d'airbag selon l'une quelconque des revendications précédentes, **caractérisé en ce que** la languette de fixation (4) est fixée respectivement par au moins une ligne de liaison (46', 47, 47') sous la forme d'une couture sur le système d'airbag qui s'étend le long d'une trajectoire courbée.

7. Système d'airbag selon la revendication 6, **caractérisé en ce que** la ligne de liaison (46', 47, 47') s'étend au moins le long d'une partie d'une trajectoire annulaire, en particulier une trajectoire circulaire.

8. Système d'airbag selon la revendication 6, **caractérisé en ce que** la ligne de liaison (46') s'étend sensiblement en forme de U ou V.

9. Système d'airbag selon l'une quelconque des revendications précédentes, **caractérisé en ce qu'**une section de fixation d'une languette de fixation (4) respective est rabattue autour d'une ligne de liaison (46, 47, 47'), par laquelle la languette de fixation (4) est fixée sur le système d'airbag de sorte que la section de fixation dépasse d'une arête (11, 21) du système d'airbag.

10. Système d'airbag selon l'une quelconque des revendications précédentes, **caractérisé en ce qu'**au moins une languette de fixation (4) a été fixée sur une zone gonflable déjà pliée (1a, 1b) du système d'airbag.

11. Système d'airbag selon l'une quelconque des revendications précédentes, **caractérisé en ce que** la section de fixation (4a) d'une languette de fixation (4) respective est réalisée flexible de manière à pouvoir se déplacer sous l'effet de la force dans différentes positions angulaires par rapport à la ligne de liaison (46, 46', 47, 47').

12. Système d'airbag selon l'une quelconque des revendications précédentes, **caractérisé en ce que** les deux couches de matériau (10a, 10b) d'une zone gonflable (1a, 1b) du système d'airbag forment respectivement un élément d'une partie de sac à gaz en un morceau qui est rabattue le long d'au moins une ligne de pliage (11) de sorte que les deux couches de matériau (10a, 10b) s'opposent, et **en ce que** les deux couches de matériau (10a, 10b) sont reliées entre elles en dehors de la ligne de pliage (11) de sorte qu'elles définissent une zone (1a, 1b) gonflable pour former un coussin de gaz.

13. Système d'airbag selon la revendication 12, **caractérisé en ce que** la ligne de pliage (11) s'étend, par rapport à l'état intégré dans un véhicule automobile du système d'airbag, le long d'une arête de toit (DK) latérale du véhicule automobile.

14. Système d'airbag selon la revendication 12 ou 13, **caractérisé en ce que** la ligne de pliage (11) forme un axe de symétrie de la partie de sac à gaz à l'état déployé à plat de la partie de sac à gaz respective.

15. Système d'airbag selon l'une quelconque des revendications 12 à 14, **caractérisé en ce qu'**au moins une languette de fixation (4) est fixée sur la zone gonflable (1a, 1b) dans l'entourage de la ligne de pliage (11).
